# EUROPÄISCHE PATENTSCHRIFT

(11) **EP 3 074 725 B1**
(45) Veröffentlichungstag und Bekanntmachung des Hinweises auf die Patenterteilung: **19.12.2018**
(21) Anmeldenummer: 14802663.6
(22) Anmeldetag: 25.11.2014
(51) Int. Cl.: G01D 5/14, G01V 3/08

(54) **VORRICHTUNG UND VERFAHREN ZUR ERFASSUNG EINER POSITION EINES POSITIONSGEBERS**
DEVICE AND METHOD FOR DETECTING A POSITION OF A POSITION TARGET
DISPOSITIF ET PROCÉDÉ POUR DÉTECTER UNE POSITION D'UNE CIBLE DE POSITION

(30) Priorität: 28.11.2013 DE 102013224409
(43) Veröffentlichungstag der Anmeldung: 05.10.2016
(73) Patentinhaber: Fraunhofer-Gesellschaft zur Förderung der angewandten Forschung e.V., 80686 München (DE)
(72) Erfinder: HACKNER, Michael, 93155 Hemau OT Haag (DE); HOHE, Hans-Peter, 91332 Heiligenstadt (DE)
(74) Vertreter: Zimmermann, Tankred Klaus
(86) Internationale Anmeldenummer: PCT/EP2014/075516
(87) Internationale Veröffentlichungsnummer: WO 2015/078854

(56) Entgegenhaltungen:
- EP-A1- 0 580 207
- EP-A1- 2 165 159
- WO-A1-2006/035350
- DE-A1-102005 042 050
- DE-U1-202011 109 077
- US-A- 4 810 965
- Austriamicrosystems: "AS5410 3D-Hall Encoder absolut linear - Data sheet", , 20 November 2012 (2012-11-20), XP055395142, Retrieved from the Internet: URL:http://datasheet.octopart.com/AS5410-D B-Austriamicrosystems-datasheet-12599534.p df [retrieved on 2017-08-01]
- Austriamicrosystems: "All-in-One with 3D Hall Multiple 3D Hall cells", , 4 May 2011 (2011-05-04), XP055395137, Retrieved from the Internet: URL:http://ams.com/chi/content/download/14 7126/764101/version/2 [retrieved on 2017-08-01]

## Beschreibung

Die Erfindung bezieht sich auf eine Vorrichtung zur Erfassung einer Position eines Positionsgebers, der ein von einer elektrischen Magnetfeldquelle erzeugtes Magnetfeld beeinflusst. Die Erfindung bezieht sich ferner auf ein Verfahren zur Erfassung einer Position des Positionsgebers mit einer derartigen Vorrichtung.

Im Großmaschinen- oder Automobilbau oder in automatisierten Anlagen und Apparaten steht man häufig vor der Aufgabe, die Position oder Orientierung von Teilen der Maschine oder des Kraftfahrzeugs messen zu müssen. Aus Gründen der Lebensdauer, Zuverlässigkeit und einfacher Montage werden dazu häufig berührungslose Verfahren und/oder magnetische Mess-Systeme, wie z.B. magnetische Positionsgeber, eingesetzt, da diese berührungslos und damit verschleißfrei arbeiten. Ein Permanent-Magnet wird meist an einem beweglichen Maschinenteil und ein Magnetfeldsensor an einem festen, das heißt stationären Ort befestigt. Bewegt sich der Magnet, dann kann diese Änderung über eine Änderung des Magnetfeldes am Ort des Sensors bestimmt werden.

Nachteilig an diesen Anordnungen ist die Temperaturabhängigkeit der Messung, da sowohl das Magnetfeld des Permanent-Magneten als auch die Empfindlichkeit und ein Offset des Sensors massiv von der Temperatur abhängig sind. Diese Effekte können durch aufwendige Korrekturmaßnahmen abgemildert werden. Durch 3D-Messmethoden, wie sie beispielsweise in [1] beschrieben sind, kann zwar die Abhängigkeit von der Empfindlichkeit des Sensors und des Magnetfeldes des Permanent-Magneten systematisch behoben werden. Der Offset der Sensoren muss aber immer noch aufwendig korrigiert werden.

Ein weiterer Nachteil ist die Abhängigkeit von störenden Magnetfeldern, die sich dem Feld des Permanent-Magneten überlagern. Dies können entweder das Erdmagnetfeld oder auch starke Magnetfelder in industriellen Anlagen, wie z.B. Aluminium-Hütten oder Magnetfelder in der Nähe von Elektromagneten, beispielsweise auf Schrottplätzen, sein. Jedoch können sich auch kleinere Störfelder durch elektrische Ströme oder magnetische Materialien in der Nähe der Messanordnung negativ auf die Messgenauigkeit auswirken. Dies kann zwar durch eine räumlich differentielle (Gradienten-) Auswertung von mehreren Sensor-Signalen bei homogenen Störfeldern vermieden werden. Für inhomogene Störfelder kann der Einfluss durch eine Gradienten-Messung lediglich abgemildert, jedoch nicht völlig eliminiert werden.

In modernen Systemen linearer Positions-Messung werden neben dem Permanent-Magneten meist zwei (manchmal auch mehr) 3D-Magnetfeldsensoren verwendet, um Temperatur- und Fremdfeld-unabhängig zu werden. Durch Auswertung der Feldlinienrichtung anstelle des Betrages der Magnetfeldstärke kann eine Temperatur-stabile Positionsmessung erreicht werden. Durch Verwendung von Gradienten können vorhandene Fremdfelder gut unterdrückt werden, so dass auch ohne magnetische Abschirmungen relativ störsichere Positionsmessungen erreicht werden.

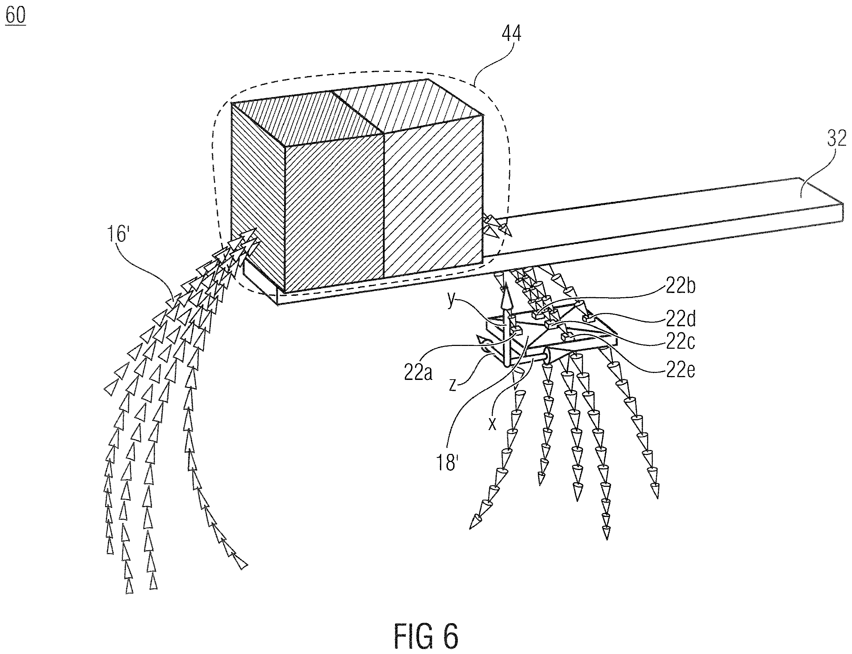

Ein Beispiel für einen Stand derzeit am Markt verfügbarer Bausteine mit Permanent-Magnet als Positionsgeber und einem integrierten Sensorschaltkreis (Sensor-Integrated Circuit - Sensor-IC) mit zumindest zwei 3D-Magnetfeldsensoren ist in Fig. 6 dargestellt.

Fig. 6 zeigt eine schematische Darstellung einer Vorrichtung 60 für eine lineare Positionsmessung mit 3D-Magnetfeldsensoren zur Positionserkennung eines Körpers 12' in einem Permanent-Magnetfeld 16'. Das Permanent-Magnetfeld 16' wird durch einen Permanent-Magneten 44 erzeugt, der an einem beweglichen Element 32 angeordnet ist. Eine Auswerteeinrichtung 18' weist fünf Sensoren 22a-e auf, die ausgebildet sind, um das Permanent-Magnetfeld 16' in jeweils drei Raumrichtungen zu erfassen. Die Sensoren 22a-e sind auf einer Platine, beispielsweise auf oder in einem Sensor-ASIC kreuzförmig angeordnet. Das bedeutet, um den Sensor 22c sind die Sensoren 22a, 22b, 22d und 22e jeweils in positiver und negativer x- und z-Richtung äquidistant angeordnet. Basierend auf der äquidistanten und definierten Anordnung der Sensoren 22a-e kann eine Bewegung des beweglichen Elements 32 bzw. des Permanent-Magneten 44 zu veränderlichen Magnetfeldlinien bzw. Gradienten des Permanent-Magnetfeldes 16' führen. Die veränderliche Ausrichtung der Magnetfeldlinien bzw. Gradienten des Permanent-Magnetfeldes 16' kann in jedem der Sensoren 22a-e feststellbar sein, so dass basierend auf den definierten Abständen zwischen den Sensoren 22a-e auf eine Position des Permanent-Magneten 44 zurückgeschlossen werden kann. Eine temperaturunabhängige und möglicherweise Fremdfeld-verbesserte Variante kann bereits mit zwei aber auch mit mehreren 3D-Sensoren 22a-e realisiert werden, wie es beispielsweise in [1] beschrieben ist.

Prinzipiell können Magnetfelder, die von einem Permanent-Magneten erzeugt sind und mithin DC-Magnetfelder darstellen, von externen DC-Magnetfeldern, wie etwa dem Erdmagnetfeld, überlagert sein. Eine Unterdrückung derartiger externer Magnetfelder kann bei einem DC-Magnetfeld, welches zur Positionsbestimmung verwendet wird, aufwendiger sein, so dass eine verschlechterte Unterdrückung von Störfeldern resultieren kann. Ferner kann eine Verwendung von Permanent-Magneten zur Erzeugung des Permanent-Magnetfeldes 16' dazu führen, dass der Permanent-Magnet 44 bei einer Montage, beispielsweise an dem beweglichen Element 32 unter Einhaltung von Lagetoleranzen platziert und ausgerichtet werden muss. Dabei kann eine Translations-Toleranz mit geringen Problemen behaftet sein, wohingegen beispielsweise eine Rotations-Toleranz, insbesondere bei einer Kugel mit größeren Problemen behaftet sein kann. In anderen Worten treten bei der Produktion eines Sensorsystems mechanische Toleranzen auf, die sich auch auf die Messgenauigkeit auswirken können. In vielen Systemen werden solche Toleranzen durch eine Systemkalibrierung korrigiert. Für eine mechanische Montage ist insbesondere ein Kugelmagnet problematisch, da die Magnetisierungsachse nicht durch die geometrischen Form des Magneten gekennzeichnet ist. Bei einem Kugelmagneten kann es deshalb erforderlich sein, eine magnetische Ausrichtungs-Vorrichtung festzulegen, die den Magneten korrekt zur restlichen Anordnung ausrichtet.

Permanent-Magneten können zudem kostenintensiv sein, insbesondere im Hinblick auf sich verteuernde Materialien wie Seltene Erden.

Linear-variable Differential-Transformatoren (LVDT), wie sie beispielsweise in [2] beschrieben sind, können eine Spulen-Kopplung zwischen einer Primärspule und zwei Sekundärspulen über einen in einem Freiheitsgrad beweglichen magnetisierbaren Kern, der sich im Inneren der Spulen linear bewegen kann, nutzen. Eine Überlagerung von um 180° phasenverschobene Ausgangsspannungen der Sekundärspulen zeigt ein variierendes Ausgangs-Signal der LVDT-Vorrichtung, je nach Lage des Geber-Körpers, das heißt des magnetisierbaren Kerns. Ferro-induktive Wegaufnehmer, wie sie beispielsweise in [3] beschrieben sind, weisen eine ähnliche Funktionsweise auf.

Magnetoinduktive Prinzipien, wie sie beispielsweise in [3] beschrieben sind, können eine Spule mit einem weich magnetisierbaren Kern aufweisen. Die Spule kann eine starke Änderung der Induktivität aufweisen, wenn der Kern durch ein Gebermagnetfeld gesättigt wird. Bei einer in einem Freiheitsgrad möglichen Bewegung des Positionsgebers ist der Anteil des gesättigten Materials positionsabhängig. Der Bewegungsgeber ist dabei ein Permanent-Magnet. Überlagernde Felder können das Messprinzip stören, was keine ideale Unterdrückung von Störfeldern erlaubt.

Induktive, analoge Abstandssensoren, wie sie beispielsweise in [3] beschrieben sind, nutzen eine Änderung der Induktivität einer Spule und mithin eine Änderung einer Resonanz-Frequenz eines Schwingkreises, in welchem die Spule angeordnet ist, bei einer Annäherung eines magnetisierbaren Materials, wobei das Messprinzip eine Bewegung in einem Freiheitsgrad ermöglicht.

Prinzipien, wie sie beispielsweise bei Tonabnehmern für Gitarren genutzt werden, weisen einen Permanent-Magneten auf, der die Saiten der Gitarre magnetisiert. Eine Spule detektiert ein Magnetfeld der bewegten Saiten, so dass eine magnetisch induzierte Spannung über einen Verstärker auf Lautsprecher übertragen werden kann.

In [4] wird eine Vorrichtung mit einem konstanten Backbias-(Permanent-)Magneten mit einem magnetisierbaren Zahnrad gezeigt. Derartige Vorrichtungen erlauben keine ideale Unterdrückung von Störfeldern.

Die Dokumente DE 10 2005 045 774 A1 und DE 40 33 252 A1 zeigen weitere Vorrichtungen zur Positionsbestimmung.

Wünschenswert wäre eine Vorrichtung, die eine Positionsbestimmung eines Elements unabhängig von äußeren Magnetfeldern ermöglicht.

Die Aufgabe der vorliegenden Erfindung besteht deshalb darin, Vorrichtung und Verfahren zu schaffen, die eine robustere, platzsparende, d. h. klein-bauende, und kostengünstigere Erfassung von Positionen von Körpern ermöglicht.

Diese Aufgabe wird durch den Gegenstand der unabhängigen Patentansprüche gelöst.

Der Kerngedanke der vorliegenden Erfindung besteht darin, erkannt zu haben, dass ein mittels eines elektrischen Stromes in einer elektrischen Magnetfeldquelle erzeugtes Magnetfeld von einem Positionsgeber, der sich in einer Umgebung der elektrischen Magnetfeldquelle in dem elektrisch erzeugten Magnetfeld befindet, beeinflusst wird, die Beeinflussung mit einer Sensoreinrichtung erfasst und mit einer Auswerteeinrichtung bestimmt werden kann, so dass die Position des Positionsgebers basierend auf der Beeinflussung des elektrisch erzeugten Magnetfelds bestimmbar ist.

Ausführungsbeispiele der vorliegenden Erfindung schaffen eine Vorrichtung mit einer elektrische Magnetfeldquelle zur Erzeugung eines Magnetfelds, einer Sensoreinrichtung, die ausgebildet ist, um das Magnetfeld zu erfassen und Sensorsignale basierend auf dem erfassten Magnetfeld bereitzustellen. Ferner weisen Ausführungsbeispiele eine Auswerteeinrichtung auf, die ausgebildet ist, um die Sensorsignale zu empfangen und basierend auf den Sensorsignalen die Position eines Positionsgebers zu bestimmen, wenn das Magnetfeld in einer Umgebung der elektrischen Magnetfeldquelle von dem Positionsgeber beeinflusst ist.

Vorteilhaft an diesen Ausführungsbeispielen ist, dass basierend auf einer elektrischen Erzeugung des Magnetfeldes auf eine Erzeugung des Magnetfeldes durch Permanent-Magneten verzichtet werden kann.

Wird der Positionsgeber von dem Magnetfeld durchströmt, das heißt befindet sich der Positionsgeber in dem Magnetfeld, so wird der Positionsgeber selbst magnetisiert oder es wird basierend auf einem in dem Positionsgeber induzierten elektrischen Strom ein magnetisches Sekundärfeld erzeugt. Das Sekundärfeld überlagert das Magnetfeld der elektrischen Magnetfeldquelle gemäß den Regeln der Superposition, so dass das Magnetfeld basierend auf der Position des Positionsgebers beeinflusst ist. Die Beeinflussung kann mittels der Sensoreinrichtung und der Auswerteeinrichtung festgestellt werden, so dass eine Position des Positionsgebers bestimmbar ist. Die Vorrichtung ist miniaturisierbar. Eine elektrische Magnetfeldquelle ist gegenüber einem Permanentmagneten steuer- bzw. anpassbar, so dass das Magnetfeld ebenfalls steuer- bzw. anpassbar ist. Ferner kann eine elektrische Magnetfeldquelle kostengünstiger bereitgestellt werden als ein Permanent-Magnet.

Gemäß einem weiteren Ausführungsbeispiel umfasst eine Vorrichtung eine elektrische Energiequelle, die ausgebildet ist, um die elektrische Magnetfeldquelle mit einer elektrischen Wechselspannung zu beaufschlagen, so dass von der elektrischen Magnetfeldquelle ein magnetisches Wechselfeld erzeugt wird, wenn die elektrische Wechselspannung an der elektrischen Energiequelle anliegt. Ein magnetisches Wechselfeld, dessen Polarität mit einer Frequenz wechselt, kann vorteilhaft bei einer Kompensation von äußeren magnetischen Feldern sein.

Bei Ausführungsbeispielen ist die Auswerteeinrichtung ausgebildet, um ein störendes Fremdfeld basierend auf einem Lock-In-Verfahren oder einem Chopper-Verfahren herauszurechnen, d. h. zu kompensieren, und basierend auf dem Lock-In-Verfahren oder dem Chopper-Verfahren die Position des Positionsgebers zu bestimmen.

Vorteilhaft an diesem Ausführungsbeispiel ist, dass basierend auf dem Lock-In-Verfahren oder dem Chopper-Verfahren auch geringe Veränderungen des zu messenden Magnetfeldes durch den Positionsgeber bestimmbar sein können.

Weitere Ausführungsbeispiele zeigen ein System mit einer Vorrichtung zur Erfassung einer Position eines Positionsgebers und einem relativ zu der Steuereinrichtung oder der elektrischen Magnetfeldquelle beweglichen Element, das mit dem Positionsgeber verbunden ist oder bei dem das bewegliche Element der Positionsgeber ist und bei der die Sensoreinrichtung eine größere Entfernung zu der elektrischen Magnetfeldquelle als eine Entfernung zwischen der Sensoreinrichtung und dem Positionsgeber aufweist. So kann eine Position des Elements der Vorrichtung bzw. des Positionsgebers erfasst und beispielsweise ein Betriebszustand des Systems überwacht werden.

Vorteilhaft an diesen Ausführungsbeispielen ist, dass basierend auf einem gegenüber dem Positionsgeber großen Abstand der elektrischen Magnetfeldquelle zu der Sensoreinrichtung basierend auf verhältnismäßig starken Beeinflussungen des Magnetfeldes durch den Positionsgeber eine geringere Sensor-Dynamik und mithin niedrigere Auswertefrequenzen verwendet werden können.

Ein weiteres Ausführungsbeispiel zeigt ein System mit einer Vorrichtung zur Erfassung einer Position eines Positionsgebers und einem relativ zu der Steuereinrichtung oder der elektrischen Magnetfeldquelle beweglichen Element, das mit dem Positionsgeber verbunden ist oder bei dem das bewegliche Element der Positionsgeber ist und bei der der Positionsgeber eine größere Entfernung zu der elektrischen Magnetfeldquelle als zu der Sensoreinrichtung aufweist.

Vorteilhaft an diesem Ausführungsbeispiel ist, dass die Sensoreinrichtung und die elektrische Magnetfeldquelle benachbart zueinander angeordnet werden können, so dass eine einfache Verbindung von Sensoreinrichtung und elektrischer Magnetfeldquelle hergestellt werden kann, so dass eine Synchronisation eines Auswertetaktes und einer Ansteuerung der elektrischen Magnetfeldquelle erleichtert werden kann.

Ein alternatives Ausführungsbeispiel zeigt ein System mit einer Vorrichtung zur Erfassung einer Position eines Positionsgebers, bei der die Sensoreinrichtung und die elektrische Magnetfeldquelle in einem gemeinsamen Gehäuse angeordnet sind.

Vorteilhaft an diesem Ausführungsbeispiel ist, dass eine Anordnung in einem gemeinsamen Gehäuse eine Anordnung der Sensoreinrichtung und der elektrischen Magnetfeldquelle in einer konstanten Relativposition zueinander ermöglicht, so dass eine Kalibrierung der Sensoreinrichtung auf das von der elektrischen Magnetfeldquelle generierte Magnetfeld ermöglicht und gegebenenfalls ein Schutz vor mechanischen Beschädigungen der Sensoreinrichtung und/oder der elektrischen Magnetfeldquelle erhalten werden kann.

Weitere vorteilhafte Ausführungsformen der vorliegenden Erfindung sind der Gegenstand der abhängigen Patentansprüche.

Bevorzugte Ausführungsbeispiele der vorliegenden Erfindung werden nachfolgend Bezug nehmend auf die beiliegenden Zeichnungen erläutert. Es zeigen:
- Fig. 1: ein schematisches Blockschaltbild einer Vorrichtung zur Erfassung einer Position eines Positionsgebers;
- Fig. 2: eine schematische Darstellung eines Systems mit einer Vorrichtung zur Erfassung einer Position des Positionsgebers bei der eine Sensoreinrichtung zwischen dem Positionsgeber und einer elektrischen Magnetfeldquelle angeordnet ist;
- Fig. 3: eine schematische Darstellung eines Systems mit einer Vorrichtung zur Erfassung der Position des Positionsgebers, bei der Positionsgeber zwischen der Sensoreinrichtung und der elektrischen Magnetfeldquelle angeordnet ist;
- Fig. 4: eine schematische Darstellung des Systems mit einer Vorrichtung zur Erfassung der Position des Positionsgebers, bei die elektrische Magnetfeldquelle zwischen der Sensoreinrichtung und dem Positionsgeber angeordnet ist;
- Fig. 5: eine schematische Darstellung des Systems, bei dem der Positionsgeber ein bewegliches Element des Systems ist und bei dem die Sensoreinrichtung, die Auswerteeinrichtung und die elektrische Magnetfeldquelle in drei räumlichen Freiheitsgraden in dem System verteilt sind;
- Fig. 6: eine schematische Darstellung einer Vorrichtung für eine lineare Positionsmessung mit 3D-Magnetfeldsensoren zur Positionserkennung eines Körpers in einem Permanent-Magnetfeld;
- Fig. 7: eine schematische Darstellung einer Hysterese-Kennlinie zur Verdeutlichung der Verluste, die basierend auf einer Ummagnetisierung von Positionsgebern resultieren können;
- Fig. 8: ein beispielhaftes Schaltbild eines Colpitts-Oszillators;
- Fig. 9a: eine als gewickelte Spule ausgeführte elektrische Magnetquelle, die einen ferromagnetischen Kern aufweist und mit einer elektrischen Energiequelle verbunden ist;
- Fig. 9b: die Anordnung aus elektrischer Magnetfeldquelle aus Fig. 9a, bei der eine Polarität der elektrischen Energiequelle vertauscht ist;
- Fig. 10: eine alternative schematische Darstellung einer elektrischen Magnetfeldquelle, die als Spule ausgeführt ist und mit der elektrischen Energiequelleverbunden ist.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

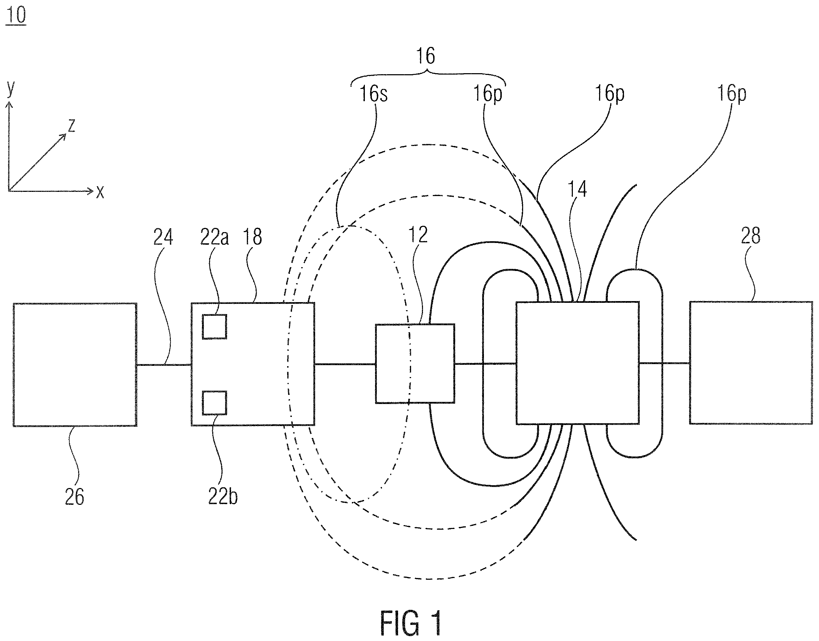

Fig. 1 zeigt ein schematisches Blockschaltbild einer Vorrichtung 10 zur Erfassung einer Position eines Positionsgebers 12. Bei dem Positionsgeber 12 kann es sich bspw. um einen Körper handeln, der zumindest teilweise aus ferromagnetischen Materialien gebildet ist.

Alternativ oder zusätzlich kann es sich bei dem Positionsgeber 12 um ein elektrisch leitfähiges Objekt, wie etwa eine kurzgeschlossene elektrische Spule handeln. Bei dem ferromagnetischen Material kann es sich beispielsweise um Eisen, Nickel und/oder Kobalt handeln. Alternativ oder zusätzlich kann der Positionsgeber 12 ferromagnetische Legierungen, wie etwa aus Nickel (Ni) und Eisen (Fe) gebildetes Permalloy (Ni₈₀Fe₂₀), Supermalloy, welches gegenüber dem Permalloy zusätzlich Molybdän aufweist, metallische Gläser auf Eisen- oder Kobaltbasis oder anderen Legierungen aufweisen.

Vorrichtung 10 umfasst eine elektrische Magnetfeldquelle 14, die ausgebildet ist, um ein Magnetfeld 16 zu erzeugen, wenn ein elektrischer Strom durch die elektrische Magnetfeldquelle 14 fließt. Bei der elektrischen Magnetfeldquelle 14 kann es sich um eine elektrisch leitfähige Struktur, wie etwa einen geraden, gekrümmten oder gebogenen Leiter oder eine Spule handeln. Die elektrische Magnetfeldquelle 14 kann einen Spulenkern zur Erhöhung des magnetischen Flusses aufweisen, wenn die elektrische Magnetfeldquelle 14 eine Spule ist.

In anderen Worten weist das Magnetfeld 16 den primären Anteil 16p und den optionalen sekundären Anteil 16s auf, wobei eine Überlagerung der Anteile 16p und 16s das Magnetfeld 16 bilden. Umfasst der Positionsgeber bspw. ferromagnetische Materialien, erfolgt eine Ausrichtung der Weiß'schen Bezirke oder Domänen in dem Positionsgeber 12 basierend auf dem primären Magnetfeld 16p, so dass auch das Magnetfeld 16 insgesamt von der elektrischen Magnetfeldquelle 14 erzeugt ist. Ist der Positionsgeber 12 bspw. eine kurzgeschlossene elektrische Spule, so wird in dieser, wenn sie von dem Magnetfeld 16p erfasst wird, zumindest kurzeitig ein elektrischer Strom induziert, der zu einer Generierung des sekundären Magnetfeldes 16s führt. Das von der kurzgeschlossenen Spule zumindest kurzzeitig erzeugte überlagernde sekundäre Magnetfeld 16s kann dabei die Form eines Magnetfeldes, wie es von einem Dipol erzeugt wird, aufweisen. Infolgedessen kann die kurzgeschlossene Spule als ein Dipol mit einer Orientierung im Raum detektierbar sein, so dass basierend auf der Auswertung in der Auswerteeinrichtung 26 auf eine Orientierung der kurzgeschlossenen Spule im Raum zurückgeschlossen werden kann.

Bei einer Abwesenheit des Positionsgebers 12 kann das Magnetfeld 16 auch lediglich das primäre Magnetfeld 16p umfassen. Befindet sich der Positionsgeber 12 in dem von der elektrischen Magnetfeldquelle 12 erzeugten primären Magnetfeld 16p, so kann der Positionsgeber 12 ein sekundäres Magnetfeld 16s erzeugen, welches das primäre Magnetfeld 16p überlagert. Eine Anwesenheit des Positionsgebers 12 in dem primären Magnetfeld 16p ein verändertes, das heißt von dem sekundären Magnetfeld 16s überlagertes, Magnetfeld 16 an der Sensoreinrichtung 18 messbar machen.

In anderen Worten ändert sich das Magnetfeld 16 der Spule 14 am Ort des Sensors 18 mit dem Strom, der durch die Spule 14 geschickt wird.

Vorrichtung 10 umfasst ferner eine Sensoreinrichtung 18, die zwei oder mehr Sensoren 22a und 22b aufweist, und die ausgebildet ist, um das Magnetfeld 16 zu erfassen und Sensorsignale 24 basierend auf dem erfassten Magnetfeld 16 zu liefern. Jeder der zumindest zwei Sensoren 22a und 22b ist ausgebildet, um eine Raumrichtungskomponente des Magnetfelds 16 zu erfassen und ein der jeweiligen Raumrichtungskomponente entsprechendes Signal auszugeben. Bei der Raumrichtungskomponente kann es sich beispielsweise um eine x-, y- und/oder z-Komponente des Magnetfelds 16 handeln. Die Sensoren 22a und 22b können räumlich von einander beabstandet sein und ausgebildet sein, um die gleiche Raumrichtungskomponente oder von einander verschiedene Raumrichtungskomponenten erfassen. Alternativ können die Sensoren 22a und 22b auch an einer gemeinsamen Position angeordnet sein und ausgebildet sein, zwei von einander verschiedene Raumrichtungskomponenten zu erfassen. Dies kann beispielsweise durch eine Anordnung von zwei oder mehr jeweils zueinander versetzten, bspw. senkrecht zu einander stehenden Hall-Sensoren erfolgen, so dass jeder der Hall-Sensoren eine Raumrichtungskomponente des Magnetfeldes 16 erfassen kann. Alternativ kann die Sensoreinrichtung auch mehrere Sensoren aufweisen.

Bei den Hall-Sensoren kann es sich bspw. um Sensoren handeln, wie sie in der DE19908473, DE19943128, DE19954360, EP1436849 oder EP14389755 beschrieben sind.

Die Vorrichtung 10 umfasst ferner eine Auswerteeinrichtung 26, die ausgebildet ist, um die Sensorsignale 24 zu empfangen und basierend auf den Sensorsignalen 24 die Position des Positionsgebers 12 zu bestimmen, wenn das Magnetfeld 16 in einer Umgebung der elektrischen Magnetfeldquelle 14 von dem Positionsgeber 12 beeinflusst ist.

Basierend auf der räumlichen Beabstandung der Sensoren 22a und 22b und der räumlichen Beabstandung zwischen der elektrischen Magnetfeldquelle 14 und dem Positionsgeber 12 können die überlagernden Effekte des Sekundärfeldes 16s an den Orten der Sensoren 22a und 22b voneinander verschieden sein, so dass die Auswerteeinrichtung 26, wie etwa ein Messgerät oder ein Computer, eine Position des Positionsgebers bezogen auf die Sensoreinrichtung 18 oder die elektrische Magnetfeldquelle 14 bestimmen kann.

Der Positionsgeber 12 befindet sich dabei außerhalb der elektrischen Magnetfeldquelle 14 und kann bezüglich der Sensoreinrichtung 18 und/oder der elektrischen Magnetfeldquelle 14 jeweils oder gemeinsam in einer x-Richtung, einer y-Richtung und/oder einer z-Richtung eindimensional, das heißt entlang einer Geraden, zweidimensional, das heißt in einer Ebene oder dreidimensional, das heißt in drei Raumrichtungen, beweglich angeordnet sein.

Der Positionsgeber 12 kann beispielsweise ein Element oder Bauteil eines Systems, wie etwa einer Werkzeugmaschine, einer Pumpe oder eine sonstigen Vorrichtung sein, bei der eine Position eines Elements, wie etwa eine Frässpindel oder ein Schwimmkörper in einer Vorrichtung zur Messung von Fluidströmen berührungslos gemessen werden soll. Dabei kann der Positionsgeber 12 oder seine magnetisierbaren Komponenten, Materialien oder Spulen eine beliebige Form, wie etwa einen Quader, ein Oval, eine Ellipse oder eine Kugel aufweisen. Ferner kann der Positionsgeber 12 mit dem Element des Systems, dessen Position detektiert werden soll, verbunden sein oder das Element ganz oder teilweise bilden.

In anderen Worten kann Vorrichtung 10 auch als eine Anordnung zur Messung der Position in ein, zwei oder drei Raumrichtungen bestehend aus einem oder mehreren Magnetfeld-Sensoreinrichtungen und einem Positions-Geber beschrieben werden, die dadurch gekennzeichnet ist, dass der Positions-Geber kein Permanent-Magnet ist, sondern aus einem Positionsgeber und einer Spule zur Auf- bzw. Ummagnetisierung von ferromagnetischen Materialien oder Spulenelementen besteht. Vorrichtung 10 kann u.a. für eine translatorische oder gegebenenfalls auch rotatorische 1D-, 2D- und/oder 3D-Positionsmessung, wie etwa in der Industrie, im automobilen Sektor oder im Maschinenbau einsetzbar sein. So kann die Position von Geber-Körper bzw. Spule relativ zum Sensor bestimmt werden. Eine Magnetisierungs-Frequenz kann flexibel wählbar sein, so dass neben einem Gleichstromfeld (DC-Feld) eine beliebige Frequenz einstellbar sein kann. Dies kann zu einer verbesserten Unterdrückung von Störfeldern, wie beispielsweise inhomogenen DC-Felder führen, deren Einflüsse beispielsweise durch ein Lock-In- bzw. Chopper-Verfahren eliminiert werden können.

Durch einen "echten" magnetischen "Chopper" kann auf aufwendige Spinning-Current-Ansteuerungen und -Schaltungen verzichtet werden. Ein Offset der Sensoren und analogen Signal-Verarbeitungen kann basierend auf dem Chopper systematisch unterdrückt werden.

Die Vorrichtung 10 weist dabei eine universelle Funktionsweise auf. Welche der Komponenten des Positionsgebers 12, der elektrischen Magnetfeldquelle 14 und der Sensoreinrichtung 18 relativ zueinander fest oder bewegt sind, kann im Wesentlichen beliebig ausgelegt werden. So kann beispielsweise relativ zu der Sensoreinrichtung 18 lediglich der Positionsgeber 12, oder die elektrische Magnetfeldquelle 14 oder die elektrische Magnetfeldquelle 14 und der Positionsgeber 12 gemeinsam bewegt werden. Damit ist es möglich, jeweils eine Position von relativ zu der Sensoreinrichtung 18 bewegten Komponenten oder einer Komponente davon zu erfassen, also des Positionsgebers 12 oder der elektrischen Magnetfeldquelle 14 oder der elektrischen Magnetfeldquelle 14 und des Positionsgebers 12 gemeinsam. Alternativ kann die Relativbewegung auch derart erfolgen, dass die Sensoreinrichtung 18 relativ zu dem Positionsgeber 12, oder zu der elektrischen Magnetfeldquelle 14 oder zu dem Positionsgeber 12 und der elektrischen Magnetfeldquelle 14 gemeinsam bewegt wird, so dass die Position der Sensoreinrichtung 18 gegenüber den jeweils unbewegten Komponenten ermittelt wird.

Alternativ können relativ zu der Sensoreinrichtung der Positionsgeber und/oder die elektrische Magnetfeldquelle bewegt werden. Dies erlaubt eine Positionsbestimmung des Positionsgebers oder der elektrischen Magnetfeldeinrichtung relativ zu dem Sensor.

In anderen Worten verzerrt der Positionsgeber 12 das Feld 16p der Spule 14 in Abhängigkeit von seiner Relativposition bezüglich der Spule 14 und der Sensoreinrichtung 18. Die Verzerrung liefert so das eigentliche Signal für die Positionsmessung.

Ist der Positionsgeber 12 ausgebildet, um das Magnetfeld symmetrisch in die Raumrichtungen, die von den Sensoren erfasst werden, zu emittieren oder zu verzerren, so kann auf eine Ausrichtung des Gebers bezüglich der elektrische Magnetfeldquelle 12 und/oder der Sensoreinrichtung verzichtet werden. Dies kann bspw. in Form eines runden ferromagnetischen Körpers oder senkrecht zueinander angeordneten Spulen umgesetzt werden.

Alternativ kann eine Ausrichtung des Positionsgebers 12 bezüglich der Sensoreinrichtung 18 und/oder der elektrischen Magnetfeldquelle 14 entfallen, wenn eine Position oder eine Positionsänderung des Positionsgebers 12 lediglich in ein oder zwei Dimensionen, erkannt werden soll und die von dem Positionsgeber erzeugten Verzerrungen des Magnetfeldes eine symmetrische Form bezüglich der Bewegungsrichtungen des Positionsgebers 12 aufweisen. Beispielsweise kann ein ferromagnetischer Körper eine zylindrische Form oder die Form eines Würfels aufweisen, dessen Mittelpunktachse entlang einer eindimensionalen Bewegungsrichtung orientiert ist. Alternativ ist vorstellbar, dass beispielsweise der Positionsgeber 12 eine Form einer runden Scheibe aufweist, deren Hauptseiten parallel zu einer zweidimensionalen Bewegungsebene des Positionsgebers 12 orientiert sind.

Eine elektrische Energiequelle 28 ist mit der elektrischen Magnetfeldquelle 14 verbunden und ausgebildet, um einen elektrischen Strom an die elektrische Magnetfeldquelle 14 zu liefern, der eine Erzeugung des Magnetfeldes 16 in der elektrischen Magnetfeldquelle 14 bewirkt.

Die elektrische Energiequelle 28 kann ausgebildet sein, um einen Gleichstrom mit einer im Wesentlichen gleichbleibender Amplitude und/oder Vorzeichen an die elektrische Magnetfeldquelle 14 zu liefern. Dadurch kann die elektrische Magnetfeldquelle 14 das Magnetfeld 16 derart erzeugen, dass der Positionsgeber 12 in Abhängigkeit seiner Position zu der elektrischen Magnetfeldquelle 14 unterschiedlich aufmagnetisiert wird, wenn der Positionsgeber 12 etwa ferromagnetische Materialen aufweist oder eine von der Position abhängigen Induktion erfolgt. Das bedeutet, dass Gradienten des Magnetfeldes 16 bzw. des primären Magnetfeldes 16p abhängig von einer Relativposition des Positionsgebers 12 bezüglich der elektrischen Magnetfeldquelle 14 voneinander verschieden sein können. Dies kann bspw. zu einer voneinander verschiedenen Ausrichtung der Weiß'schen Bezirke oder einer Induktion unterschiedlichen Umfangs und mithin einer voneinander verschiedenen Ausrichtung des Sekundärfeldes 16s führen, so dass das Magnetfeld 16 basierend auf verschiedenen Positionen des Positionsgebers 12 verschieden beeinflusst ist.

In anderen Worten sieht die Sensoreinrichtung 18 bzw. jeder der Sensoren 22a und 22b ein Magnetfeld 16, das durch die Position des Positionsgebers 12 unterschiedlich verzerrt wird und damit Rückschlüsse auf die Position des Positionsgebers 12 zulässt.

Alternativ oder zusätzlich kann die elektrische Energiequelle 28 ausgebildet sein, einen Gleichstrom mit wechselndem Vorzeichen (alternierender Gleichstrom) an die elektrische Magnetfeldquelle 14 zu liefern. Basierend auf einem Gleichstrom mit wechselndem Vorzeichen kann das Magnetfeld 16 ein Wechselfeld mit alternierender Polarisationsrichtung sein. Ein Wechselfeld mit alternierender Polarisationsrichtung kann eine Kompensation äußerer Störeinflüsse ermöglichen. Äußere Störeinflüsse können Gleichfelder, wie etwa das Erdmagnetfeld oder Felder eines Elektro- oder Permanent-Magneten, oder Wechselfelder, wie etwa solche, die von benachbarten Geräten oder Systemen, bspw. ein Schweißgerät oder ein Elektromagnet, erzeugt werden, sein.

Die Auswerteeinrichtung 26 kann ausgebildet sein, um mit einer Art Lock-In- oder Chopper-Verfahren aus einer differentiellen Messung des Magnetfeldes 16 bei einem Erregerstrom mit positivem oder negativem Vorzeichen an der elektrischen Magnetfeldquelle 14 ein möglicherweise störendes Fremdfeld heraus zu rechnen. Bei einer differentiellen Messung des Magnetfeldes 16 kann bspw. eine Richtungskomponente der Sensoren 22a und 22b von einander subtrahiert werden, um eine Differenz zu erhalten, aus der Informationen über die Position des Positionsgebers 12 erhalten werden können. Basierend auf einer Differenzbildung zwischen Messwerten der Sensoren 22a und/oder 22b bei verschiedenen Polarisationen des Magnetfeldes 16 äußere Magnetfelder erkannt und kompensiert werden.

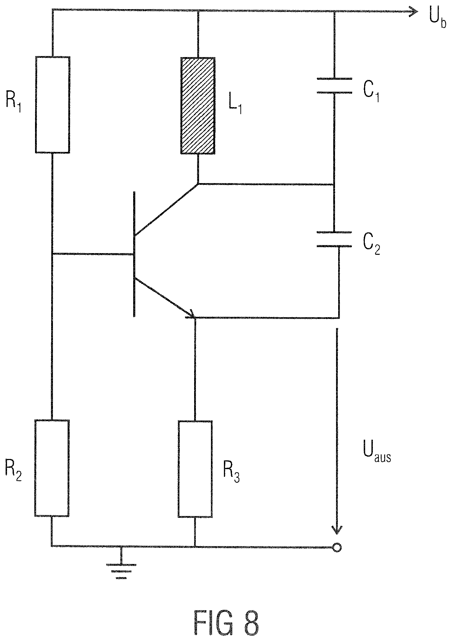

Alternativ oder zusätzlich kann die elektrische Energiequelle 28 ausgebildet sein, um einen Wechselstrom an die elektrische Energiequelle 14 zu liefern. Gegenüber einer Ansteuerung der elektrischen Magnetfeldquelle 14 mit einem Gleichstrom oder einem alternierendem Gleichstrom kann eine Ansteuerung der elektrischen Magnetfeldquelle 14 mit einem Wechselstrom vorteilhaft sein, etwa wenn die elektrische Magnetfeldquelle 14 mit einem elektrischen Kondensator mit einer Kapazität verschaltet ist. Der elektrische Kondensator und die elektrische Magnetfeldquelle können, wenn die elektrische Magnetfeldquelle eine Induktivität aufweist, einen Induktivitäts(L)-Kondensator(C)-Schwingkreis (LC-Schwingkreis) bilden. Ist eine Frequenz des Wechselstroms im Wesentlichen gleich mit einer Resonanz-Frequenz des LC-Schwingkreises, kann dieser von der elektrischen Energiequelle 28 bei dieser Resonanz-Frequenz angeregt werden. Der LC-Schwingkreis, auch LC-Oszillator genannt, kann beispielsweise ein Colpitts-Oszillator, wie er beispielsweise in Fig. 8 dargestellt und in [5] beschrieben ist, ein Hartley-Oszillator, wie er beispielsweise in [6] beschrieben ist, oder eine beliebige andere Oszillatorschaltung sein.

In anderen Worten kann die Sensoreinrichtung 18 zum Oszillator (LC-Schwingkreis) synchron betrieben werden, um im Lock-In-Verfahren oder dem Chopper-Verfahren das Positions-Signal aus dem magnetischen Wechselfeld 16 zu extrahieren. Die resultierenden Ausgangs-Signale der Sensoren 22a und 22b bzw. der Sensoreinrichtung 18 sind nach dem Lock-In-Verfahren bzw. nach der Chopper-Demodulation gleich oder ähnlich wie bei den bekannten Verfahren mit Permanent-Magneten als Positionsgeber und können somit genauso weiterverarbeitet werden, um die Position des Positionsgebers 12 zu bestimmen.

Ähnlich bedeutet in diesem Zusammenhang, dass sich Signale durch die, bei einem Permanentmagneten nicht auftretende, Ummagnetisierung gegenüber bekannten Verfahren unterscheiden können. In einem Betrieb der elektrischen Magnetfeldquelle 14 mit einem alternierenden Gleichstrom oder einem Wechselstrom erfolgt eine Ummagnetisierung des Positionsgebers 12. Dadurch können sich neben den Maximalwerten der Magnetisierung, die für kurze Zeitabschnitte identisch zur Magnetisierung eines Permanentmagneten sein kann, auch Übergangs- und Einschwingvorgänge der Magnetisierung ergeben, die beim Permanentmagneten nicht auftreten. Werden auch während der Ummagnetisierung Signalanteile erfasst, kann anstelle eines zu bekannten Verfahren gleichen Signals ein ähnliches Signal erfasst werden.

Ein derartiger Resonanzbetrieb der elektrischen Magnetfeldquelle 14 kann dazu führen, dass in einem kontinuierlichen, das bedeutet fortwährenden oder andauernden, Betrieb lediglich die Verlustleistung des Schwingkreises ausgeglichen werden muss und die Vorrichtung energieeffizient betrieben werden kann. Die Verlustleistung umfasst beispielsweise ohm'sche Verluste im Schwingkreis, wie etwa in den Windungen der Spule, wenn die elektrische Magnetfeldquelle 14 eine Spule ist, Abstrahlungs-Verluste des magnetischen Feldes 16 und/oder Ummagnetisierungs-Verluste in der Spule und/oder dem Positionsgeber 12, wenn dieser ferromagnetische Materialien aufweist. Ist die elektrische Magnetfeldquelle 14 eine Spule und weist die Spule mit einem Spulen-Kern zur Verstärkung des magnetischen Flusses auf, können auch Ummagnetisierungs-Verluste im Spulen-Kern auftreten.

Gegenüber einem Betrieb der elektrischen Magnetfeldquelle 14 mit Gleichstrom oder alternierendem Gleichstrom kann eine Energie für die Erzeugung des Magnetfeldes 16, also des Erregerfeldes, reduziert werden, da der Strom für die elektrische Magnetfeldquelle 14 nicht oder nur teilweise aus der Versorgungs-Spannung aufgebracht werden muss, das heißt von der elektrischen Energiequelle 28 bereitgestellt werden muss. Der elektrische Kondensator kann als Energiespeicher genutzt werden, um elektrische Energie, die beispielsweise bei einem Betrieb der elektrischen Magnetfeldquelle mit alternierendem Gleichstrom bei einer Umpolung des Magnetfeldes kompensiert oder vernichtet werden müsste, zwischen zu speichern und in der nächsten Periode bereitzustellen.

Gegenüber einer Ansteuerung oder Erregung der elektrischen Magnetfeldquelle 14 mit einem Gleichstrom kann ein Wechselfeld, wie es durch alternierenden Gleichstrom oder einem Wechselstrom erhalten werden kann, von vorhandenen Fremdfeldern ungestört bleiben, da eine Frequenz des Wechselfeldes eine Unterscheidung zu konstanten Magnetfeldern, wie dem Erdmagnetfeld, erlaubt. Eine Anpassung der Betriebsfrequenz und/oder der Resonanz-Frequenz der elektrischen Magnetfeldquelle 14 erlaubt zudem eine Unterscheidung des Magnetfeldes 16 bezüglich der Betriebsfrequenz von eventuellen störenden Wechselfeldern in einer Umgebung der Vorrichtung.

Eine Synchronität zwischen einer Ansteuerung der elektrischen Magnetfeldquelle 14 und der Sensoreinrichtung 18 kann beispielsweise derart erfolgen, dass eine bezüglich der Ansteuerung der elektrischen Magnetfeldquelle 14 phasenstarre Erfassung von Messwerten mit der Sensoreinrichtung 18 erfolgt. Das bedeutet, dass beispielsweise bei einer Ansteuerung mit alternierendem Gleichstrom oder mit einem Wechselstrom eine bestimmte, ggf. ganzzahlige, Anzahl von Messwerten während der Ansteuerung mit dem positiven Strom erfasst werden und bei einer Ansteuerung mit einem entsprechendem negativen Strom ebenfalls Messwerte mit der bestimmten Anzahl erfasst werden. Vereinfacht ausgedrückt bedeutet dies, dass die Erfassung der Messwerte unter Wissen der Polarität und/oder der Amplitude des die elektrische Magnetfeldquelle 14 anregenden Stroms erfolgt.

Alternativ können die Messwerte auch fortlaufend erfasst und einer Polarität zugeordnet werden, so dass eine phasensynchrone Auswertung der Messergebnisse, beispielsweise mittels schneller Fourier-Transformation (Fast Fourier Transformation - FFT) erfolgen kann. Dabei kann jeweils eine feste Anzahl von Messwerten pro Zeitraum, in dem die elektrische Magnetfeldquelle mit einem Strom mit positiven und/oder negativen Vorzeichen angesteuert wird, erfasst werden. Die Messwerte können dem Vorzeichen des Stromes zugeordnet werden. Eine differentielle Messung des Magnetfeldes 16 kann derart erfolgen, dass eine Differenz der Messwerte oder von Zwischenergebnissen, die auf den Messwerten basieren, gebildet wird, so dass auf eine Anwesenheit von störenden externen Magnetfeldern geschlossen werden kann und diese in weiteren Ergebnissen herausgerechnet werden können.

Vorteilhaft an dieser Ausführungsform ist, dass auf eine Verwendung von Permanent-Magneten zur Erzeugung eines magnetischen Feldes verzichtet werden kann und gleichzeitig Messungen durchgeführt werden können, die gegenüber störenden externen Magnetfeldern unbeeinflusst oder nur unwesentlich beeinflusst sein können. Ferner erlaubt eine Vorrichtung 10 eine Erfassung eines Körpers in einem elektrisch erzeugten magnetischen Feld auch außerhalb eines Spuleninneren, wodurch beispielsweise LVDT-Sensoren eingeschränkt sind.

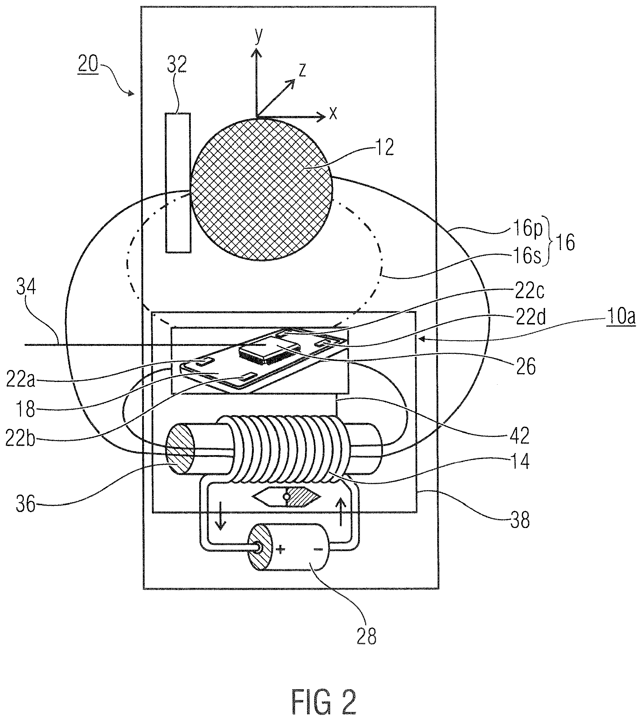

Fig. 2 zeigt eine schematische Darstellung eines Systems 20 mit einer Vorrichtung 10a zur Erfassung einer Position des Positionsgebers 12. Das System 20 kann beispielhaft eine Durchflusssteuerung für einen Volumenstrom sein. Das System 20 umfasst ein bewegliches Element 32, wie etwa ein Ventil. Der Positionsgeber 12 ist mit dem beweglichen Element 32 verbunden. Alternativ kann der Positionsgeber 12 auch eine Form des beweglichen Elements, wie etwa das Ventil, aufweisen, so dass der Positionsgeber 12 das bewegliche Element 32 des Systems 20 ist. Das bewegliche Element 32 ist bezüglich einer Vorrichtung 10a beweglich in drei Raumrichtungen entlang einer x-, y- und z-Richtung beweglich angeordnet.

Die Sensoreinrichtung 18 weist vier Sensoren 22a, 22b, 22c und 22d auf, die voneinander beabstandet auf einer Platine der Sensoreinrichtung 18 angeordnet sind. Die Auswerteeinrichtung 26 ist als integrierte Schaltung (Integrated Circuit - IC) als Chip ausgeführt und mit den Sensoren 22a-d auf der Platine angeordnet. Die Auswerteeinrichtung 26 ist ausgebildet, um die Sensorsignale der Sensoren 22a-d zu empfangen. Die Auswerteeinrichtung 26 ist ferner ausgebildet, um ein Positionssignal 34 auszugeben, dass eine Position des Positionsgebers 12 und mithin des beweglichen Elements 32 anzeigt.

Die elektrische Energiequelle 28 ist beispielhaft als Batterie bzw. Energiequelle mit konstanter Polarität dargestellt. Die elektrische Magnetfeldquelle 14 ist als Spule ausgeführt und weist einen Kern 36 auf, der ausgebildet ist, um einen magnetischen Fluss der Spule, das heißt der elektrischen Magnetfeldquelle 14 zu verstärken.

Die Sensoreinrichtung 18, die Auswerteeinrichtung 26 und die elektrische Magnetfeldquelle 14 sind in einem gemeinsamen Gehäuse 38 angeordnet. Das Gehäuse 38 ist so bezüglich dem System 20 ausgerichtet, dass der Positionsgeber 12 eine größere Entfernung zu der elektrischen Magnetfeldquelle 14 aufweist als zur Sensoreinrichtung 18. Das bedeutet, dass die Sensoreinrichtung 18 zwischen dem Positionsgeber 12 und der elektrischen Magnetfeldquelle 14 angeordnet ist.

In anderen Worten befindet sich der Positionsgeber in unmittelbarer Nähe des Sensors. Die Spule kann direkt an einen im Sensor-ASIC integrierten Erreger-Schaltkreis angeschlossen und eventuell als eine gemeinsame Einheit vergossen werden. Durch die Nähe von Geber und Sensor ist das zu analysierende Streufeld des Geber-Körpers am Ort des Sensors groß. Allerdings kann auch das Erregerfeld der Spule am Ort des Sensors hoch sein.

Eine Anordnung der Sensoreinrichtung 18 und der elektrische Energiequelle 28 in einem gemeinsamen Gehäuse oder als Teile einer gemeinsamen Schaltung ermöglicht eine einfache Synchronisierung von elektrischer Magnetfeldquelle 14 und Sensoreinrichtung 18. Beispielsweise kann ein Vorzeichenwechsel des ansteuernden Stromes an der elektrischen Energiequelle 28 ein auslösendes Ereignis (Trigger) für die Sensoreinrichtung sein, der der Sensoreinrichtung 18 über eine Verbindung 42 bereitgestellt wird. Die Sensoreinrichtung 18 und die elektrische Energiequelle 28 können beispielsweise auf einem Chip angeordnet sein, um eine gemeinsame Schaltung zu bilden. Die Sensoreinrichtung 18 kann basierend auf dem auslösenden Ereignis die Erfassung der festen ganzzahligen Anzahl von Messwerten beginnen. Alternativ kann beispielsweise die Sensoreinrichtung 18 bei einem Neubeginn einer Erfassung der festen ganzzahligen Anzahl von Messwerten der elektrischen Energiequelle 28 ein auslösendes Ereignis bereitstellen, so dass die elektrische Energiequelle 28 basierend auf dem auslösenden Ereignis einen Vorzeichenwechsel des ansteuernden Stromes auslöst. In anderen Worten kann in einer in Fig. 2 gezeigten Ausführungsform die Spule 14 zusammen mit dem Sensor 18 als Einheit angeordnet werden.

Wird die elektrische Magnetfeldquelle 14 mit einem elektrischen Wechselstrom oder einem alternierenden Gleichstrom beaufschlagt, so kann die Auswerteeinrichtung 26 ausgebildet sein, die Sensorsignale 24 mit einem Abtasttakt abzutasten, der mit einer Frequenz der elektrischen Wechselspannung oder des alternierenden Gleichstroms synchronisiert ist.

Obwohl der Positionsgeber 12 als Kugel dargestellt ist, ist ebenfalls vorstellbar, dass der Positionsgeber 12 ein nicht symmetrischer Körper oder ein teilweise symmetrischer Körper, wie etwa ein Würfel, ist oder ein asymmetrisches Magnetfeld erzeugt. Erzeugt der Positionsgeber 12 ein teilweise oder vollständig asymmetrisches Magnetfeld, so kann beispielsweise auch eine Drehung des Positionsgebers 12 erkannt werden, da eine Überlagerung des primären Magnetfeldes 16p durch das von dem Positionsgeber 12 generierte sekundäre Magnetfeld 16s von einer Orientierung des Positionsgebers 12 im Raum abhängen kann.

Ein Zusammenhang zwischen Spulenstrom und Magnetfeld 16 am Ort der Sensoren 22a-d ist bei einer Abwesenheit des Positionsgebers 12 durch die Geometrie der Spule 14 und deren Lage relativ zur Sensoreinrichtung 18 bzw. zu den Sensoren 22a-d, genau definiert und kann konstant bleiben, wenn die Sensoreinrichtung 18 und die Spule 14 zueinander fixiert sind. Der Zusammenhang zwischen Spulenstrom und Magnetfeld 16 kann daher bei der Auswertung der Signale berücksichtigt und/oder korrigiert werden.

Vorteilhaft an dieser Anordnung, die auch als Grundanordnung bezeichnet werden kann, ist, dass eine einfache Verbindung 42 zwischen Sensoreinrichtung 18 und elektrischer Magnetfeldquelle 14 herstellbar ist, beispielsweise um eine differentielle Messung des Magnetfeldes 16 synchron zu ermöglichen. Die Verbindung 42 kann genutzt werden, um die Spulenanordnung synchron zum Sensor 18 anzuregen oder umgekehrt, den Sensor 18 synchron zur Spulenanregung zu betreiben. Ferner ist das Geberfeld, das heißt eine Verzerrung des Magnetfeldes 16 durch den Positionsgeber 12 am Ort der Sensoren 22a-d relativ hoch. Das heißt, die elektrische Magnetfeldquelle 14 weist einen relativ großen Abstand zu dem Positionsgeber auf. An der Position des Positionsgebers 12 weist das Magnetfeld 16 bzw. das primäre Magnetfeld 16p basierend auf dem Abstand zu der elektrischen Magnetfeldquelle 14 eine vergleichsweise niedrige Intensität auf, so dass das Sekundärfeld 16s des Positionsgebers 12 bezüglich des Primärfeldes 16p relativ groß ist. Das Magnetfeld 16 bzw. das primäre Magnetfeldes 16p kann jedoch am Ort der Auswerteeinrichtung 18 und/oder der Sensoren 22a-d relativ groß sein, was auch als ein Störfeld wirken kann. Werden die Sensoren 22a-d mit einer großen Sensor-Dynamik in einem Bereich zwischen 10⁴ und 10¹⁰, etwa in einer Größenordnung von 10⁶ mit einem Sensorbereich zwischen 1 µT und 1 T ausgeführt, kann dies kompensiert werden. Die Sensordynamik beschreibt eine Auflösungsgrenze bei gegebener Messdauer und den möglichen Messbereich mit ein und derselben Schaltung.

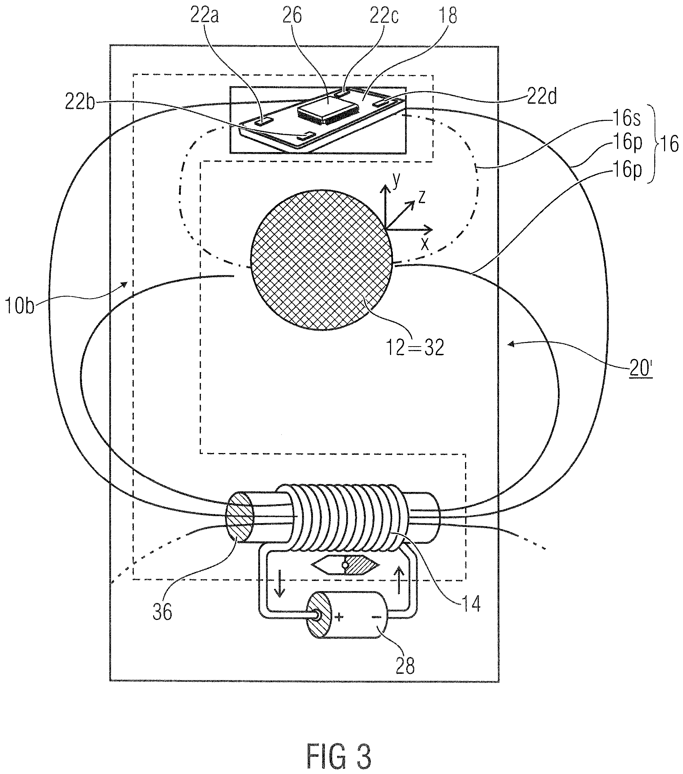

Fig. 3 zeigt eine schematische Darstellung eines Systems 20' mit einer Vorrichtung 10b zur Erfassung der Position des Positionsgebers 12. Bei dem System 20'ist das bewegliche Element 32 der Positionsgeber 12.

Die Sensoreinrichtung 18 weist eine größere Entfernung zu der elektrischen Magnetfeldquelle 14 als zu dem Positionsgeber 12 auf. In anderen Worten ist der Positionsgeber 12 zwischen der Sensoreinrichtung 18 und der elektrischen Magnetfeldquelle 14 angeordnet. In anderen Worten kann eine Anordnung der Komponenten in der Vorrichtung 10b gegenüber einer Anordnung, wie sie in Fig. 2 für Vorrichtung 10a gezeigt ist, einen Vorteil in Bezug auf das Verhältnis zwischen Streufeld des Gebers und dem Erregerfeld der Spule, das aufgrund der größeren Entfernung zu dem Sensor deutlich geringer ist, aufweisen. Allerdings sind Spule und Sensor nicht mehr räumlich zusammen, das heißt benachbart, angeordnet, was eventuell einen höheren Verdrahtungs- und Montage-Aufwand zur Folge haben kann. Möglicherweise kann die Spule durch eine separate Schaltung erregt, das heißt angesteuert, werden, wodurch sich allerdings an der Auswerteeinrichtung, wie etwa beim Chopper-Betrieb, ein zusätzlicher Aufwand zur Synchronisierung der Sensoreinrichtung und der Spulen-Erregung ergeben kann.

Der magnetisierbare Positions-Geber befindet sich zwischen Spule und Sensor. Dies kann dazu führen, dass das Erreger-Feld der Spule am Ort des Sensors geringer ist, das Streufeld des Positions-Gebers, das eigentlich erfasst werden soll, im Vergleich dazu jedoch am Ort des Sensors relativ groß ist. Da sich Sensor und Spule nicht in unmittelbarer Nähe zueinander befinden, kann eine Synchronisierung der Ansteuerung beider Schaltungs-Teile aus einer gemeinsamen Steuer- und Auswerte-Schaltung heraus zur Synchronisierung genutzt werden.

Eine voneinander beabstandete Anordnung und mithin eine räumliche Trennung der elektrischen Magnetfeldquelle 14 von der Sensoreinrichtung 18 bzw. der Auswerteeinrichtung 26 kann zu einem erhöhten Aufwand bezüglich der Synchronisation von elektrischer Magnetfeldquelle 14 und Auswerteeinrichtung 26 und/oder Sensoreinrichtung 18 führen, insbesondere wenn die Komponenten 14, 18 und/oder 26 als separate Geräte in separaten Gehäusen ausgeführt sind. Vorteilhaft an dieser Ausführungsform gegenüber einer Anordnung, wie sie in Fig. 2 beispielhaft dargestellt ist, ist eine größere Distanz zwischen der elektrischen Magnetfeldquelle 14 und der Sensoreinrichtung 18. Dies kann zu einer geringeren Beeinflussung der Sensoreinrichtung 18 durch die elektrische Magnetfeldquelle 14 führen, so dass die Sensoren 22a-d bereits mit einer gegenüber der Anordnung in Fig. 2 geringeren Sensor-Dynamik zuverlässige, das heißt von der elektrischen Magnetfeldquelle 14 weniger beeinflusste oder unbeeinflusste, Sensorwerte liefern können.

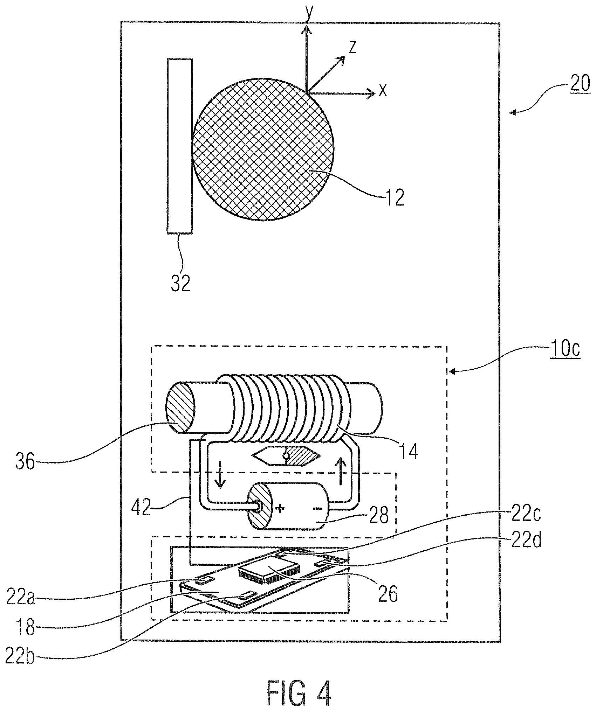

Fig. 4 zeigt eine schematische Darstellung des Systems 20, bei dem der Positionsgeber 12 eine größere Entfernung zu der Sensoreinrichtung 18 als zu der elektrischen Magnetfeldquelle 14 aufweist. In anderen Worten ist die elektrische Magnetfeldquelle 14 zwischen dem Positionsgeber und der Sensoreinrichtung 18 angeordnet.

Die benachbarte Anordnung der elektrischen Magnetfeldquelle 14 und der Sensoreinrichtung 18 bzw. der Auswerteeinrichtung 26 ermöglicht, wie in Fig. 2 dargestellt, eine einfache Verbindung 42 von Sensoreinrichtung 18 und der elektrischen Magnetfeldquelle 14 und mithin eine einfachere Synchronisation von Anregung der elektrischen Magnetfeldquelle und Erfassung von Sensordaten. Basierend auf der Anordnung der elektrischen Magnetfeldquelle 14 zwischen dem Positionsgeber 12 und den Sensoren 22a-d kann eine Verzerrung des Magnetfeldes durch den Positionsgeber 12 am Ort der Sensoren 22a-d relativ gering sein. Mit einer höheren Sensordynamik, wie sie bspw. Hall-Sensoren aufweisen können, kann das Störfeld der Spule kompensiert werden.

In anderen Worten sind Spule und Sensor, wie es etwa in Fig. 2 gezeigt ist, in unmittelbarer Nähe zueinander angeordnet. Basierend auf der Anordnung der Spule zwischen Positionsgeber 12 und Sensoreinrichtung 18 kann bei gleichen Größenmaßstäben das Streufeld des Gebers im Verhältnis zum Erregerfeld der Spule kleiner oder deutlich kleiner sein als bei Anordnungen, wie sie beispielsweise in Fig. 2 oder Fig. 3 gezeigt sind. Eine solche Anordnung kann bspw. ein Betriebszustand der Vorrichtung 10a sein, wenn der Positionsgeber 12 mehrdimensional im Raum bewegbar und an einen Ort, wie es in Fig. 4 gezeigt ist, bewegt ist. Durch eine geeignete Vorverarbeitung der Sensorsignale können auch solche Zustände, in denen das Erregerfeld der Spule im Verhältnis zum Streufeld des Gebers, das eigentlich gemessen werden soll, sehr groß ist, erfasst werden. Obwohl diese Anordnung ungünstig sein kann, kann es vorteilhaft sein, dass Sensor und Spule nebeneinander liegen und somit wieder als eine Einheit montiert werden können.

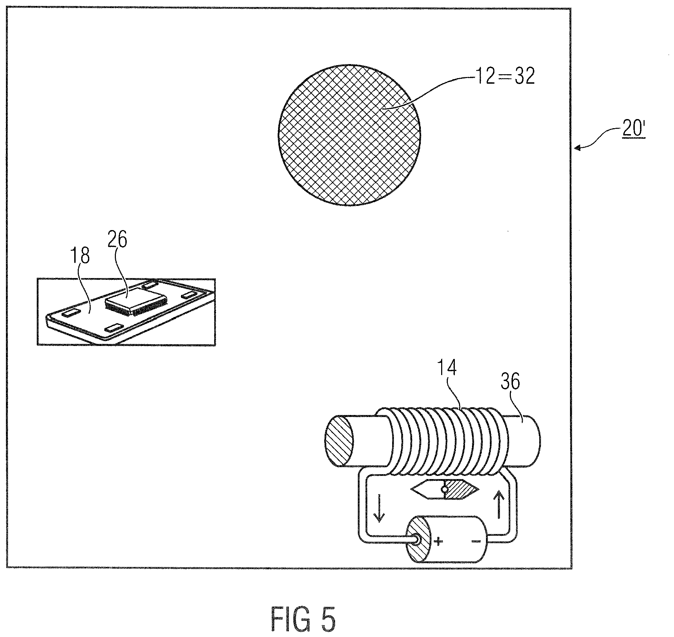

Fig. 5 zeigt eine schematische Darstellung des Systems 20', bei dem der Positionsgeber 12 das bewegliche Element 32 ist, die Sensoreinrichtung 18, die Auswerteeinrichtung 26 und die elektrische Magnetfeldquelle 14 in drei räumlichen Freiheitsgraden in dem System 20' verteilt sind. Prinzipiell können die elektrische Magnetfeldquelle 14, die Sensoreinrichtung 18 und der Positionsgeber 12 eine beliebige Anordnung zueinander aufweisen.

In anderen Worten können Spule, Sensor und Geber im Prinzip auch beliebig zueinander angeordnet werden, etwa wenn sich die Anordnung nicht auf eine Ebene beschränkt, sondern alle drei räumlichen Freiheitsgrade genutzt werden. Eine Erfassung des jeweiligen Wirkungsgrades kann beispielsweise über Leistungs- oder Performance-Messungen erfolgen.

Manche Ausführungsbeispiele zeigen eine Anordnung des Positionsgebers 12 näher an der Sensoreinrichtung 18 als die elektrische Magnetfeldquelle 14. So kann eine Verzerrung des Magnetfeldes durch den Positionsgeber 12 deutlicher messbar sein. Ferner kann es vorteilhaft sein, die Sensoreinrichtung 18 und die elektrische Magnetfeldquelle 14 räumlich nahe aneinander anzuordnen, so dass eine einfache Synchronisation von Erregung der elektrischen Magnetfeldquelle 14 und der Messung in der Sensoreinrichtung 18 möglich ist.

Ferner kann es vorteilhaft sein, wenn die Sensoreinrichtung 18 zwischen der elektrischen Magnetfeldquelle 14 und dem Positionsgeber 12 und mit einer geringen Entfernung, das heißt möglichst nah am Positionsgeber 12 angeordnet ist, da das Geber-Feld, das heißt, dass das sekundäre Magnetfeld bzw. die Verzerrung des primären Magnetfeldes (Spulenfeldes) durch den Positionsgeber am Ort der Sensoreinrichtung 18 um so größer ist, je geringer der Abstand zwischen Sensoreinrichtung 18 und dem Positionsgeber 12 ist.

Prinzipiell kann die elektrische Magnetfeldquelle 14 und die Sensoreinrichtung 18 eine konstante Relativposition zueinander aufweisen, so dass eine Relativposition des Positionsgebers 12 variabel ist. Alternativ kann der Positionsgeber 12 und die Sensoreinrichtung 18 eine konstante Relativposition zueinander aufweisen, so dass eine Relativposition der elektrischen Magnetfeldquelle 14 variabel ist. Alternativ kann der Positionsgeber 12 und die elektrische Magnetfeldquelle 14 eine Position aufweisen, die bezüglich einer Position der Sensoreinrichtung 18 veränderlich ist. Alternativ oder zusätzlich ist ebenfalls vorstellbar, dass der Positionsgeber 12, die Sensoreinrichtung 18 und die elektrische Magnetfeldquelle 14 jeweils relativ zueinander beweglich angeordnet sind.

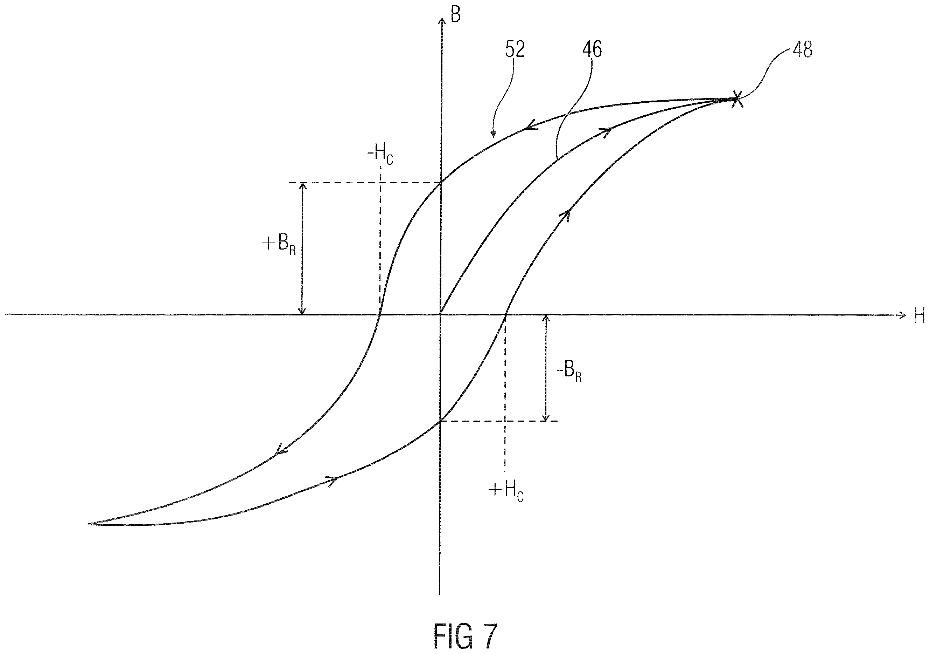

Fig. 7 zeigt eine schematische Darstellung einer Hysterese-Kennlinie 52 zur Verdeutlichung der Verluste, die basierend auf einer Ummagnetisierung von Positionsgebern resultieren können. Ein beispielsweise an einer elektrischen Spule angelegter elektrischer Strom kann zu einer Generierung eines magnetischen Feldes mit einer magnetischen Feldstärke H, welche auf einer Abszisse des Graphen dargestellt ist, führen. Ein ummagnetisierter Positionsgeber kann, wenn er von einem Magnetfeld mit der magnetischen Feldstärke H erfasst wird, aufmagnetisiert werden, was über eine an der Ordinate des Graphen dargestellten magnetischen Flussdichte B dargestellt ist. Ein Punkt 48 auf der Kennlinie 52 stellt einen Zustand eines magnetisierbaren Körpers in einem Magnetfeld H dar.

Wird der aufmagnetisierte Positionsgeber aus dem Magnetfeld entfernt oder das Magnetfeld von dem Positionsgeber entfernt, also von dem Punkt 48 ausgehend, entlang der Pfeilrichtung auf der äußeren Hüllkurve 52 in Richtung eines Abszissen-Wertes null (H=0) "gegangen", so kann in dem Positionsgeber eine Rest-Flussdichte, die Remanenz-Magnetisierung B_{R}, verbleiben. Um den Positionsgeber zu entmagnetisieren, muss ein Magnetfeld mit umgekehrter Polarisationsrichtung bis zu einem Wert einer negativen Koerzitiv-Feldstärke (-H_{C}) angelegt werden, so dass ein Ordinatenwert von null (B=0) erreicht wird. Wird ein Betrag des H-Feldes in negativer Polarisationsrichtung weiter erhöht, so wird der Positionsgeber in einer entgegengesetzten Richtung aufmagnetisiert, so dass nach Entfernung des Magnetfeldes eine negative Remanenz-Magnetisierung (-B_{R}) verbleibt, welche erst nach Anlegen eines Magnetfeldes mit der Koerzitiv-Feldstärke (+H_{C}) entfernt ist. Eine weitere Erhöhung der Feldstärke H kann zu einem erneuten Erreichen des Punktes 48 führen. Ein Flächeninhalt der Gesamtkurve ist ein Maß für die Verlustleistung, die während eines Ummagnetisierungszyklus anfällt.

Fig. 8 zeigt ein beispielhaftes Schaltbild eines Colpitt-Oszillators. Eine Ausgangsspannung kann dabei harmonisch mit einer Resonanz-Frequenz oszillieren, wobei die Resonanz-Frequenz basierend auf der Induktivität L₁, der Kapazität C₁ und der Kapazität C₂ und einer Amplitude in Abhängigkeit der Versorgungs-Spannung U_{b} und eines Verhältnisses der Widerstände R₁, R₂ und R₃ justiert werden kann.

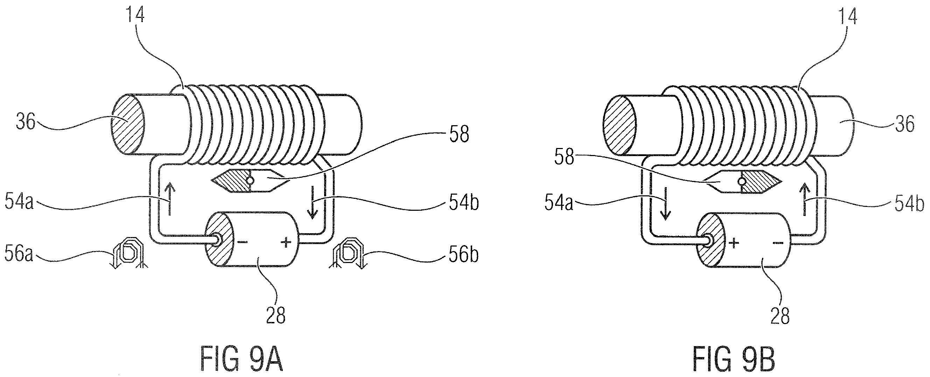

Fig. 9a zeigt eine als gewickelte Spule ausgeführte elektrische Magnetquelle 14, die den ferromagnetischen Kern 36 aufweist und von einer als Batterie dargestellten elektrischen Energiequelle 28 mit einem elektrischen Strom versorgt ist, welcher entlang von Richtungspfeilen 54a und 54b fließt. Basierend auf der Stromflussrichtung breitet sich ein magnetisches Feld entlang einer Richtung, wie sie durch Pfeile 56a und 56b dargestellt sind, aus. Dies kann zu einem magnetischen Feld mit einer Orientierung entlang des Spulenkerns 36 führen, wie es schematisch durch eine Kompassnadel 58 dargestellt ist, deren Nordpol nach links weist.

Fig. 9b zeigt die Anordnung aus elektrischer Magnetfeldquelle 14 mit ferromagnetischem Kern 36 und der elektrischen Energiequelle 28 aus Fig. 9a, bei der eine Polarität der elektrischen Energiequelle 28 vertauscht ist. Dies führt zu gegenüber Fig. 9a vertauschten Richtungspfeilen 54a und 54b, die die Stromrichtung angeben. Daraus resultiert ein magnetisches Feld mit einer gegenüber Fig. 9a vertauschten Polarität, wie es durch die Kompassnadel 58 angedeutet ist, deren Nordpol nach rechts und mithin in eine gegenüber Fig. 9a vertauschte Richtung weist.

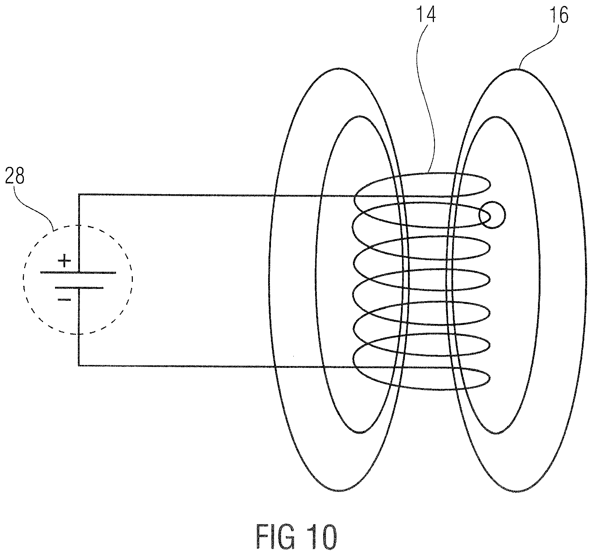

Fig. 10 zeigt eine schematische Darstellung einer elektrischen Magnetfeldquelle 14, die als Spule ausgeführt ist und mit der elektrischen Energiequelle 28, die als eine Gleichspannungsquelle ausgeführt ist, verbunden ist. Das so erzeugte Magnetfeld 16 weist im Inneren der Spule annähernd parallele Feldlinien auf. Entlang dieses parallelen Verlaufs kann ein ferromagnetischer Kern zur Verstärkung des magnetischen Flusses angeordnet werden. In einem Umfeld, d.h. außerhalb der Spule 14, weisen die Feldlinien des Magnetfeldes 16 einen nicht parallelen Verlauf auf. In dem Umfeld der elektrischen Magnetfeldquelle 14 kann eine Position des Positionsgebers und/oder des leitenden Objektes, wie etwa der kurzgeschlossenen Spule, detektiert werden.

Wie oben bereits erwähnt kann die Auswerteeinrichtung ausgebildet sein, eine Auswertung ähnlich einem Chopper-Verfahren oder einem Lock-In-Verfahren auszuführen.

Das Chopper-Verfahren basiert auf einer künstlichen Hinzufügung von Vorzeichenwechseln bei einem Signal, welches im Wesentlichen Gleichspannungscharakter hat. Das bedeutet, dass das Signal einen relativ zu einer Messfrequenz langsam veränderlichen Wert einer Amplitude aufweist. Die Amplitude kann ungeachtet dessen einen Vorzeichenwechsel aufweisen. Basierend auf einer Chopper-Frequenz wird das Signal abschnittsweise in einem Zeitraum erfasst und in einem darauffolgenden Zeitraum mit einem Vorzeichenwechsel versehen, so dass basierend auf dem Zerhacken eine Wechselspannung generiert werden kann. Die Amplitude kann der Amplitude des ursprünglichen Signals entsprechen. Das so geformte Wechselspannungssignal kann mit einem Wechselstrom (AC)-Verstärker verstärkt werden, wobei die so verstärkte Amplitude anschließend wieder gleichgerichtet werden kann. Vorteilhaft an diesem Verfahren ist, dass kein besonderer Offset-freier Verstärker benötigt wird, da eine Signalinformation des ursprünglichen Signals in dem Wechselstromsignal auf einer Trägerfrequenz (der Zerhack-Frequenz) liegt und diese mit dem AC-Verstärker verarbeitet und gegebenenfalls gefiltert werden kann.

Das Lock-In-Verfahren kann auch als phasenempfindlicher Gleichrichter bezeichnet werden, bei dem ein verrauschtes Signal, das ein Nutzsignal aufweist, welches gegenüber dem Rauschsignal geringe Amplituden, wie beispielsweise ein 0,5-faches, ein 0,2-faches oder ein 0,1-faches der Amplitude des Rauschsignals extrahiert werden kann. Das Rauschsignal kann beispielsweise durch das primäre Magnetfeld 16p, das Nutzsignal beispielsweise durch die Verzerrungen des Positionsgebers 12 und mithin durch das sekundäre Magnetfeld 16s implementiert werden. Bei einer phasenrichtigen Multiplikation des an der Auswerteeinrichtung 18 empfangenen Signals mit dem Schaltsignal, also einem Signal, mit welchem die elektrische Magnetfeldquelle 14 angesteuert wird, kann ein Ausgangs-Signal erhalten werden, das einem Anteil des Eingangssignals, das mit der Modulation (Anregesignal) in Phase liegt, gleichgerichtet und über die Zeitkonstante der Anlegefrequenz gemittelt ist, entspricht.

Dies kann beispielsweise ein Faktor, wie etwa √2 des Nutzsignals sein. Bei dem Verfahren kann die relative Phase zwischen dem zu detektierenden Signal und dem Synchronisierungssignal sehr wichtig sein, da beispielsweise ein Phasenversatz von 90°, (vgl. Cosinus (0) = 1; Cosinus (90°) ist gleich 0) dazu führen kann, dass ein Nutzsignal mit einer Amplitude von Null extrahiert wird.

Im Wesentlichen ist das Lock-In-Verfahren ein Verfahren zur Demodulation eines Nutzsignals, welches von einem Rausch-Stör- und/oder Trägesignal überlagert ist.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein. Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft. Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft. Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Literatur

[1] http://www.ams.com/eng/Products/Magnetic-Position-Sensors/3D-Absolute-Position-Sensors/AS5410
[2] http://www.ni.com/white-paper/3638/en, 26.3.2013
[3] Kucera, Gerd: "Weg- und Abstandssensoren; Drei verschleißfrei arbeitende Sensorsysteme zur linearen Wegerfassung"; Elektronik Praxis, 05.08.2008; http://www.elektronikpraxis.vogel.de/hardwareentwicklung/articles/139211/
[4] http://www.infineon.com/cms/de/product/sensors-and-wireless-control/magneticsensors/magnetic-speed-sensors/integrated-back-biasibb/channel.html?channel=db3a30433b47825b013b8f53d1257628
[5] http://de.wikipedia.org/wiki/Colpitts-Schaltung
[6] http://elektroniktutor.de/signalkunde/hartley.html

## Patentansprüche

1. Vorrichtung (10; 10a-c) zur Erfassung einer Position eines Positionsgebers (12) mit folgenden Merkmalen:
einer elektrischen Magnetfeldquelle (14), die ausgebildet ist, um ein Magnetfeld (16; 16p; 16s) zu erzeugen, wenn ein elektrischer Strom durch die elektrische Magnetfeldquelle (14) fließt;
einer Sensoreinrichtung (18), die ausgebildet ist, um das Magnetfeld (16; 16p; 16s) zu erfassen und Sensorsignale (24) basierend auf dem von dem Positionsgeber (12) beeinflussten erfassten Magnetfeld (16; 16p; 16s) zu liefern, wobei die Sensoreinrichtung (18) zumindest zwei Sensoren (22a-e) aufweist, von denen jeder ausgebildet ist, um eine Raumrichtungskomponente des Magnetfeldes (16; 16p; 16s) zu erfassen und ein der Raumrichtungskomponente entsprechendes Signal auszugeben;
einer Auswerteeinrichtung (26), die ausgebildet ist, um die Sensorsignale (24) zu empfangen und basierend auf den Sensorsignalen (24) die Position des Positionsgebers (12) zu bestimmen, wenn das Magnetfeld (16; 16p; 16s) in einer Umgebung der elektrischen Magnetfeldquelle (14) von dem Positionsgeber (12) beeinflusst ist;
wobei die Auswerteeinrichtung ausgebildet ist, um die Position des Positionsgebers (12) basierend auf einem Lock-In Verfahren oder einem Chopper-Verfahren zu bestimmen, und um für die Bestimmung der Position des Positionsgebers (12) das Magnetfeld (16; 16p; 16s) unter Verwendung der Sensorsignale (24) der zumindest zwei Sensoren (22a-e) durch Subtrahieren der jeweiligen Raumrichtungskomponente der zwei Sensoren (22a-e) von einander differentiell zu messen, um eine Differenz zu erhalten, und um aus der Differenz Informationen über die Position des Positionsgebers (12) zu erhalten.

2. Vorrichtung (10; 10a-c) gemäß Anspruch 1, die ferner eine elektrische Energiequelle (28) aufweist, die ausgebildet ist, um die elektrische Magnetfeldquelle (14) mit einem elektrischen Wechselstrom zu beaufschlagen, und bei der die Auswerteeinrichtung (26) ausgebildet ist, die Sensorsignale (24) mit einem Abtasttakt abzutasten, wobei der Abtasttakt und eine Frequenz der elektrischen Wechselspannung synchronisiert sind.

3. Vorrichtung (10; 10a-c) gemäß Anspruch 2, die ferner einen elektrischen Kondensator aufweist, der so mit der elektrischen Magnetfeldquelle (14) verbunden ist, dass die die elektrische Magnetfeldquelle (14) und der elektrische Kondensator einen elektrischen Schwingkreis bilden, der eine Resonanz-Frequenz aufweist, wobei die elektrische Energiequelle (14) ausgebildet ist, um den Schwingkreis bei seiner Resonanz-Frequenz anzuregen.

4. Vorrichtung (10; 10a-c) gemäß Anspruch 2 oder 3, bei der die elektrische Energiequelle (28) ausgebildet ist, um die elektrische Magnetfeldquelle (14) mit einer diskontinuierlichen Wechselspannung mit alternierendem Vorzeichen zu beaufschlagen.

5. Vorrichtung gemäß einem der vorangehenden Ansprüche, bei der die elektrische Magnetfeldquelle (14) eine Spule ist und einen ferromagnetischen Spulenkern (36) aufweist, der ausgebildet ist, um das von der elektrischen Magnetfeldquelle (14) erzeugte Magnetfeld (16; 16p; 16s) zu verstärken.

6. System (20) mit einer Vorrichtung (10a) zur Erfassung einer Position eines Positionsgebers (12) gemäß einem der Ansprüche 1-5 und einem relativ zu der Sensoreinrichtung (18) oder der elektrischen Magnetfeldquelle (14) beweglichen Element (32), das mit dem Positionsgeber (12) verbunden ist oder bei dem das bewegliche Element (32) der Positionsgeber (12) ist;
wobei der Positionsgeber (12) eine größere Entfernung zu der elektrischen Magnetfeldquelle (14) als zu der Sensoreinrichtung (18) aufweist;
wobei der Positionsgeber in drei Raumrichtungen beweglich angeordnet ist.

7. System (20) mit einer Vorrichtung (10b) zur Erfassung einer Position eines Positionsgebers (12) gemäß einem der Ansprüche 1-5 und einem relativ zu der Sensoreinrichtung (18) oder der elektrischen Magnetfeldquelle (14) beweglichen Element (32), das mit dem Positionsgeber (12) verbunden ist oder bei dem das bewegliche Element (32) der Positionsgeber (12) ist;
wobei die Sensoreinrichtung (18) eine größere Entfernung zu der elektrischen Magnetfeldquelle (14) als eine Entfernung zwischen der Sensoreinrichtung (18) und dem Positionsgeber (12) aufweist;
wobei der Positionsgeber in drei Raumrichtungen beweglich angeordnet ist.

8. System (20) mit einer Vorrichtung (10a) zur Erfassung einer Position eines Positionsgebers (12) gemäß einem der Ansprüche 1-5, bei der die Sensoreinrichtung (18) und die elektrische Magnetfeldquelle (14) in einem gemeinsamen Gehäuse (38) angeordnet sind;
wobei der Positionsgeber in drei Raumrichtungen beweglich angeordnet ist.

9. System (20) gemäß einem der Ansprüche 6 bis 8, bei der der Positionsgeber ein würfelförmiger Körper ist.

10. Vorrichtung nach einem der Ansprüche 1-5 oder System nach einem der Ansprüche 6-9, bei der die elektrische Magnetfeldquelle (14) und die Sensoreinrichtung (18) eine konstante Relativposition zueinander aufweisen.

11. Vorrichtung nach einem der Ansprüche 1-5 oder System nach einem der Ansprüche 6-9, bei der der Positionsgeber (12) und die Sensoreinrichtung (18) eine konstante Relativposition zueinander aufweisen.

12. Vorrichtung nach einem der Ansprüche 1-5 oder System nach einem der Ansprüche 6-9, bei der der Positionsgeber (12) und die Sensoreinrichtung (18) eine Position aufweisen, die bezüglich einer Position der elektrischen Magnetfeldquelle (14) veränderlich ist.

13. Vorrichtung (10; 10a-c) zur Erfassung einer Position eines Positionsgebers (12) mit folgenden Merkmalen:
einer elektrischen Magnetfeldquelle (14), die ein Magnetfeld (16; 16p; 16s) erzeugt, wenn ein elektrischer Strom durch die elektrische Magnetfeldquelle (14) fließt;
einer Sensoreinrichtung (18), die ausgebildet ist, um das Magnetfeld (16; 16p; 16s) zu erfassen und Sensorsignale (24) basierend auf dem erfassten Magnetfeld (16; 16p; 16s) zu liefern, wobei die Sensoreinrichtung (18) zumindest zwei Hall-Sensoren (22a-e) zur Erfassung des von dem Positionsgeber (12) beeinflussten Magnetfeldes (16; 16p; 16s) aufweist;
einer Auswerteeinrichtung (26), die ausgebildet ist, um die Sensorsignale (24) zu empfangen und basierend auf den Sensorsignalen (24) die Position des Positionsgebers (12) zu bestimmen, wenn das Magnetfeld (16; 16p; 16s) in einer Umgebung der elektrischen Magnetfeldquelle (14) von dem Positionsgeber (12) beeinflusst ist;
wobei die Auswerteeinrichtung (26) ausgebildet ist, um die Position des Positionsgebers (12) basierend auf einem Lock-In Verfahren oder einem Chopper-Verfahren zu bestimmen, und ausgebildet ist, um für die Bestimmung der Position des Positionsgebers (12) das Magnetfeld (16; 16p; 16s) unter Verwendung der Sensorsignale (24) der zumindest zwei Sensoren (22a-e) durch Subtrahieren der jeweiligen drei Raumrichtungskomponenten der zwei Sensoren (22a-e) von einander differentiell zu messen, um eine Differenz zu erhalten, und um aus der Differenz Informationen über die Position des Positionsgebers (12) zu erhalten.

14. Vorrichtung gemäß Anspruch 13, wobei die zumindest zwei Hall-Sensoren von einander beabstandet angeordnet sind und ausgebildet sind, um eine gleiche Raumrichtungskomponente (x, y, z) des Magnetfeldes (16; 16p; 16s) zu erfassen und um ein der Raumrichtungskomponente (x, y, z) entsprechendes Signal auszugeben.

15. Verfahren zur Erfassung einer Position eines Positionsgebers (12) mit folgenden Schritten:
Erzeugen eines Magnetfeldes (16; 16p; 16s) mittels eines elektrischen Stroms;
Erfassen des Magnetfeldes (16; 16p; 16s) mit Sensoren (22a-e), die voneinander beabstandet sind und Liefern von einer Raumrichtungskomponente (x, y, z) entsprechenden Sensorsignalen (24) basierend auf dem von dem Positionsgeber (12) beeinflussten erfassten Magnetfeld (16; 16p; 16s);
Empfangen der Sensorsignale (24) und Bestimmen der Position des Positionsgebers (12) basierend auf einem Lock-In Verfahren oder einem Chopper-Verfahren und basierend auf den Sensorsignalen (24) durch differentielles Messen des Magnetfelds (16; 16p; 16s) unter Verwendung der Sensorsignale (24) der zumindest zwei Sensoren (22a-e) durch Subtrahieren der jeweiligen Raumrichtungskomponente von einander, um eine Differenz zu erhalten, und Erhalten von Informationen über die Position des Positionsgebers (12) aus der Differenz.

## Claims

1. A device (10; 10a-c) for detecting a position of a position indicator (12), comprising:
an electrical magnetic field source (14) configured to generate a magnetic field (16; 16p; 16s) when an electrical current flows through the electrical magnetic field source (14);
sensor means (18) configured to detect the magnetic field (16; 16p; 16s) and to provide sensor signals (24) based on the detected magnetic field (16; 16p; 16s) influenced by the position indicator (12), the sensor means (18) comprising at least two sensors (22a-e) each of which is configured to detect a spatial direction component of the magnetic field (16; 16p; 16s) and to output a signal corresponding to the spatial direction component;
evaluating means (26) configured to receive the sensor signals (24) and determine the position of the position indicator (12) based on the sensor signals (24) when the magnetic field (16; 16p; 16s) in the surroundings of the electrical magnetic field source (14) is influenced by the position indicator (12);
wherein the evaluating means (26) is configured to determine the position of the position indicator (12) based on a lock-in method or a chopper method and to differentially measure, for determining the position of the position indicator (12), the magnetic field (16; 16p; 16s) by using the sensor signals (24) of the at least two sensors (22a-22e) by subtracting the respective spatial direction component of the two sensors (22a-22e) from each other to obtain a difference and to obtain information on the position of the position indicator (12) from the difference.

2. The device (10; 10a-c) in accordance with claim 1, further comprising an electrical energy source (28) configured to provide the electrical magnetic field source (14) with an electrical alternating current, and wherein the evaluating means (26) is configured to sample the sensor signals (24) using a sample clock, wherein the sample clock and a frequency of the electrical alternating voltage are synchronized.

3. The device (10; 10a-c) in accordance with claim 2, further comprising an electrical capacitor connected to the electrical magnetic field source (14) such that the electrical magnetic field source (14) and the electrical capacitor form an electrical oscillating circuit having a resonant frequency, wherein the electrical energy source (14) is configured to excite the oscillating circuit at its resonant frequency.

4. The device (10; 10a-c) in accordance with claim 2 or 3, wherein the electrical energy source (28) is configured to provide the electrical magnetic field source (14) with a discontinuous alternating voltage of alternating sign.

5. The device in accordance with any of the preceding claims, wherein the electrical magnetic field source (14) is a coil and comprises a ferromagnetic coil core (36) configured to amplify the magnetic field (16; 16p; 16s) generated by the electrical magnetic field source (14).

6. A system (20) comprising a device (10a) for detecting a position of a position indicator (12) in accordance with any of claims 1 to 5 and an element (32) movable relative to the sensor means (18) or the electrical magnetic field source (14), the movable element being connected to the position indicator (12) or the movable element (32) being the position indicator (12);
wherein the position indicator (12) comprises greater a distance to the electrical magnetic field source (14) than to the sensor means (18);
wherein the position indicator is arranged to be movable in three spatial directions.

7. A system (20) comprising a device (10b) for detecting a position of a position indicator (12) in accordance with any of claims 1 to 5 and an element (32) movable relative to the sensor means (18) or the electrical magnetic field source (14), the movable element being connected to the position indicator (12) or the movable element (32) being the position indicator (12);
wherein the sensor means (18) comprises greater a distance to the electrical magnetic field source (14) than a distance between the sensor means (18) and the position indicator (12);
wherein the position indicator is arranged to be movable in three spatial directions.

8. A system (20) comprising a device (10a) for detecting a position of a position indicator (12) in accordance with any of claims 1 to 5, wherein the sensor means (18) and the electrical magnetic field source (14) are arranged in a common casing (38);
wherein the position indicator is arranged to be movable in three spatial directions.

9. The system (20) in accordance with any of claims 6 to 8, wherein the position indicator is a cube-shaped body.

10. The device in accordance with any of claims 1 to 5 or system in accordance with any of claims 6 to 9, wherein the electrical magnetic field source (14) and the sensor means (18) comprise a constant relative position to each other.

11. The device in accordance with any of claims 1 to 5 or system in accordance with any of claims 6 to 9, wherein the position indicator (12) and the sensor means (18) comprise a constant relative position to each other.

12. The device in accordance with any of claims 1 to 6 or system in accordance with any of claims 7 to 9, wherein the position indicator (12) and the sensor means (18) comprise a position variable relative to a position of the electrical magnetic field source (14).

13. A device (10; 10a-c) for detecting a position of a position indicator (12), comprising:
an electrical magnetic field source (14) generating a magnetic field (16; 16p; 16s) when an electrical current flows through the electrical magnetic field source (14);
sensor means (18) configured to detect the magnetic field (16; 16p; 16s) and to provide sensor signals (24) based on the detected magnetic field (16; 16p; 16s), the sensor means (18) comprising at least two Hall sensors (22a-e) for detecting the magnetic field (16; 16p; 16s) influenced by the position indicator (12);
evaluating means (26) configured to receive the sensor signals (24) and to determine the position of the position indicator (12) based on the sensor signals (24) when the magnetic field (16; 16p; 16s) in a surroundings of the electrical magnetic field source (14) is influenced by the position indicator (12);
wherein the evaluating means (26) is configured to determine the position of the position indicator (12) based on a lock-in method or a chopper method and is configured to differentially measure, for determining the position of the position indicator (12), the magnetic field (16; 16p; 16s) by using the sensor signals (24) of the at least two sensors (22a-22e) by subtracting the respective three spatial direction components of the two sensors (22a-22e) from each other to obtain a difference and to obtain information on the position of the position indicator (12) from the difference.

14. The device in accordance with claim 13, wherein the at least two Hall sensors are arranged to be spaced apart from one another and configured to detect an equal spatial direction component (x, y, z) of the magnetic field (16; 16p; 16s) and to output a signal corresponding to the spatial direction component (x, y, z).

15. A method for detecting a position of a position indicator (12), comprising:
generating a magnetic field (16; 16p; 16s) by means of an electrical current;
detecting the magnetic field (16; 16p; 16s) with sensors (22a-e) that are spaced apart from one another and providing sensor signals (24) corresponding to a spatial direction component (x, y, z) based on the detected magnetic field (16; 16p; 16s) influenced by the position indicator (12);
receiving the sensor signals (24) and determining the position of the position indicator (12) based on a lock-in method or a chopper method and based on the sensor signals (24) by differentially measuring the magnetic field (16; 16p; 16s) by using the sensor signals (24) of the at least two sensors (22a-22e) by subtracting the respective spatial direction component from each other to obtain a difference and to obtain information on the position of the position indicator (12) from the difference.

## Revendications

1. Dispositif (10; 10a à c) pour détecter une position d'une cible de position (12), aux caractéristiques suivantes:
une source de champ magnétique électrique (14) qui est conçue pour générer un champ magnétique (16; 16p; 16s) lorsqu'un courant électrique circule à travers la source de champ magnétique électrique (14);
un moyen capteur (18) qui est conçu pour détecter le champ magnétique (16; 16p; 16s) et pour fournir des signaux de capteur (24) sur base du champ magnétique (16; 16p; 16s) détecté influencé par la cible de position (12), où le moyen capteur (18) présente au moins deux capteurs (22a à e) qui sont conçus, chacun, pour détecter une composante de direction spatiale du champ magnétique (16; 16p; 16s) et pour sortir un signal correspondant à la composante de direction spatiale;
un moyen d'évaluation (26) qui est conçu pour recevoir les signaux de capteur (24) et pour déterminer, sur base des signaux de capteur (24), la position de la cible de position (12) lorsque le champ magnétique (16; 16p; 16s) dans un environnement de la source de champ magnétique électrique (14) est influencé par la cible de position (12);
dans lequel le moyen d'évaluation est conçu pour déterminer la position de la cible de position (12) sur base d'un procédé de verrouillage ou d'un procédé de hachage, et pour mesurer de manière différentielle, pour déterminer la position de la cible de position (12), le champ magnétique (16; 16p; 16s) à l'aide des signaux de capteur (24) des au moins deux capteurs (22a à e) en soustrayant la composante de direction spatiale respective des deux capteurs (22a à e) l'une de l'autre pour obtenir une différence et pour obtenir à partir de la différence des informations sur la position de la cible de position (12).

2. Dispositif (10; 10a à c) selon la revendication 1, présentant par ailleurs une source d'énergie électrique (28) qui est conçue pour soumettre la source de champ magnétique électrique (14) à un courant électrique alternatif, et dans lequel le moyen d'évaluation (26) est conçu pour balayer les signaux de capteur (24) à une cadence de balayage, la cadence de balayage et une fréquence de la tension alternative électrique étant synchronisées.

3. Dispositif (10; 10a à c) selon la revendication 2, présentant par ailleurs un condensateur électrique qui est connecté à la source de champ magnétique électrique (14) de sorte que la source de champ magnétique électrique (14) et le condensateur électrique constituent un circuit d'oscillation électrique qui présente une fréquence de résonance, où la source d'énergie électrique (14) est conçue pour exciter le circuit d'oscillation à sa fréquence de résonance.

4. Dispositif (10; 10a à c) selon la revendication 2 ou 3, dans lequel la source d'énergie électrique (28) est conçue pour soumettre la source de champ magnétique électrique (14) à une tension alternative discontinue à signe alternatif.

5. Dispositif selon l'une des revendications précédentes, dans lequel la source de champ magnétique électrique (14) est une bobine et présente un noyau de bobine ferromagnétique (36) qui est conçu pour amplifier le champ magnétique (16; 16p; 16s) généré par la source de champ magnétique (14).

6. Système (20) avec un dispositif (10a) destiné à détecter une position d'une cible de position (12) selon l'une des revendications 1 à 5 et un élément (32), mobile par rapport au moyen capteur (18) ou à la source de champ magnétique électrique (14), qui est connecté à la cible de position (12) ou dans lequel l'élément mobile (32) est la cible de position (12);
dans lequel la cible de position (12) présente une plus grande distance par rapport à la source de champ magnétique électrique (14) que par rapport au moyen capteur (18);
dans lequel la cible de position est disposée de manière mobile dans trois directions spatiales.

7. Système (20) avec un dispositif (10b) destiné à détecter une position d'une cible de position (12) selon l'une des revendications 1 à 5 et un élément (32), mobile par rapport au moyen capteur (18) ou à la source de champ magnétique électrique (14), qui est connecté à la cible de position (12) ou dans lequel l'élément mobile (32) est la cible de position (12);
dans lequel le moyen capteur (18) présente une distance par rapport à la source de champ électrique (14) plus grande qu'une distance entre le moyen capteur (18) et la cible de position (12);
dans lequel la cible de position est disposée de manière mobile dans trois directions spatiales.

8. Système (20) avec un dispositif (10a) destiné à détecter une position d'une cible de position (12) selon l'une des revendications 1 à 5, dans lequel le moyen capteur (18) et la source de champ magnétique électrique (14) sont disposés dans un boîtier commun (38);
dans lequel la cible de position est disposée de manière mobile dans trois directions spatiales.

9. Système (20) selon l'une des revendications 6 à 8, dans lequel la cible de position est un corps en forme de cube.

10. Dispositif selon l'une des revendications 1 à 5 ou système selon l'une des revendications 6 à 9, dans lequel la source de champ magnétique électrique (14) et le moyen capteur (18) présentent une position relative constante l'un par rapport à l'autre.

11. Dispositif selon l'une des revendications 1 à 5 ou système selon l'une des revendications 6 à 9, dans lequel la cible de position (12) et le moyen capteur (18) présentent une position relative constante l'un par rapport à l'autre.

12. Dispositif selon l'une des revendications 1 à 5 ou système selon l'une des revendications 6 à 9, dans lequel la cible de position (12) et le moyen capteur (18) présentent une position qui est variable par rapport à une position de la source de champ magnétique électrique (14).

13. Dispositif (10, 10a à c) de détection de la position d'une cible de position (12), aux caractéristiques suivantes:
une source de champ magnétique électrique (14) qui génère un champ magnétique (16; 16p; 16s) lorsqu'un courant électrique circule à travers la source de champ magnétique électrique (14);
un moyen capteur (18) qui est conçu pour détecter le champ magnétique (16; 16p; 16s) et pour fournir des signaux de capteur (24) sur base du champ magnétique détecté (16; 16p; 16s), où le moyen capteur (18) présente au moins deux capteurs à effet Hall (22a à e) destinés à détecter le champ magnétique (16; 16p; 16s) influencé par la cible de position (12);
un moyen d'évaluation (26) qui est conçu pour recevoir les signaux de capteur (24) et pour déterminer, sur base des signaux de capteur (24), la position de la cible de position (12) lorsque le champ magnétique (16; 16p; 16s) dans un environnement de la source de champ magnétique électrique (14) est influencé par la cible de position (12);
dans lequel le moyen d'évaluation est conçu pour déterminer la position de la cible de position (12) sur base d'un procédé de verrouillage ou d'un procédé de hachage, et pour mesurer de manière différentielle, pour déterminer la position de la cible de position (12), le champ magnétique (16; 16p; 16s) à l'aide des signaux de capteur (24) des au moins deux capteurs (22a à e) en soustrayant les trois composantes de direction spatiale respectives des deux capteurs (22a à e) l'une de l'autre pour obtenir une différence et pour obtenir à partir de la différence des informations sur la position de la cible de position (12).

14. Dispositif selon la revendication 13, dans lequel les au moins deux capteurs à effet Hall sont disposés espacés l'un de l'autre et sont conçus pour détecter une même composante de direction spatiale (x, y, z) du champ magnétique (16; 16p; 16s) et pour sortir un signal correspondant à la composante de direction spatiale. (x, y, z).

15. Procédé de détection d'une position d'une cible de position (12), aux étapes suivantes consistant à:
générer un champ magnétique (16; 16p; 16s) au moyen d'un courant électrique;
détecter un champ magnétique (16; 16p; 16s) à l'aide de capteurs (22a à e) qui sont espacés l'un de l'autre et fournir des signaux de capteur (24) correspondant à une composante de direction spatiale (x, y, z) sur base du champ magnétique (16; 16p; 16s) détecté influencé par la cible de position (12);
recevoir les signaux de capteur (24) et déterminer la position de la cible de position (12) sur base d'un procédé de verrouillage ou d'un procédé de hachage et sur base des signaux de capteur (24) en mesurant de manière différentielle le champ magnétique (16; 16p; 16s) à l'aide des signaux de capteur (24) des au moins deux capteurs (22a à e) en soustrayant la composante de direction spatiale respective l'une de l'autre pour obtenir une différence, et obtenir des informations sur la position de la cible de position (12) à partir de la différence.
